# EUROPEAN PATENT APPLICATION

(11) **EP 4 550 880 A1**
(43) Date of publication of application: **07.05.2025**
(21) Application number: 23845195.9
(22) Date of filing: 28.06.2023
(51) Int. Cl.: H04W 28/06

(54) **COMMUNICATION METHOD AND APPARATUS**

(30) Priority: 29.07.2022 CN 202210912352
(71) Applicant: Huawei Technologies Co., Ltd., Shenzhen, Guangdong 518129 (CN)
(72) Inventor: LI, Chenwan, Shenzhen, Guangdong 518129 (CN); CHEN, Lei, Shenzhen, Guangdong 518129 (CN); WU, Yiling, Shenzhen, Guangdong 518129 (CN)
(74) Representative: Pfenning, Meinig & Partner mbB
(86) International application number: PCT/CN2023/103500
(87) International publication number: WO 2024/021982

(57) **Abstract**

A communication method and apparatus are provided, and relate to the field of communication technologies, to support a radio frequency identification RFID system in segmenting data based on a segmentation mechanism, simplify the segmentation mechanism, and reduce segmentation overheads. The method may be applied to the RFID system. A first protocol layer of a terminal device obtains first information that indicates a transport block size. If a size of a first data packet is greater than the transport block size, the first protocol layer segments the first data packet based on the transport block size, to obtain a plurality of first segmented data packets, and sends the plurality of first segmented data packets. The first data packet is a data packet received by the first protocol layer from a previous protocol layer. A size of the first segmented data packet is less than or equal to the transport block size.

## Description

This application claims priority to Chinese Patent Application No. 202210912352.9, filed with the China National Intellectual Property Administration on July 29, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A radio frequency identification (radio frequency identification, RFID) technology is a non-contact automatic identification technology. An RFID system generally includes a reader (Reader) and a tag (Tag). The reader may send a continuous wave (continuous wave, CW) to provide energy or a carrier for the tag, and may further send signaling to page the tag, to indicate the tag to initiate an operation such as access.

In a communication system, for a time division duplex (time division duplex, TDD) network, uplink transmission and downlink transmission may be distinguished by using slots. To be specific, an uplink slot (for example, a U slot) is used for the uplink transmission, and a downlink slot (for example, a D slot) is used for the downlink transmission. To match a slot configuration of the TDD network, data may be generally segmented, and segmented data is transmitted in a slot, to complete data transmission in a specified U/D slot.

For the RFID system, both a frequency and time are exclusive to the reader. During communication between the tag and the reader, a complete data packet may be sent. Because the RFID system does not have a segmentation mechanism, and a data transmission rate of the RFID system is low, the RFID system may need to continuously occupy a plurality of slots during data transmission, and cannot match the slot configuration of the TDD network. Consequently, the data transmission cannot be performed in the U/D slot specified by the TDD network.

Based on this, the RFID system may segment data with reference to a segmentation mechanism in a new radio (new radio, NR) system. However, the segmentation mechanism in the NR system is complex, and segmentation overheads are high.

In conclusion, how to design a segmentation mechanism in the RFID system becomes an urgent technical problem to be resolved.

### SUMMARY

Embodiments of this application provide a communication method and apparatus, to support a radio frequency identification RFID system in segmenting data based on a segmentation mechanism, simplify the segmentation mechanism, and reduce segmentation overheads.

According to a first aspect, an embodiment of this application provides a communication method. The method is applied to an RFID system. The method may include: A first protocol layer of a terminal device obtains first information that indicates a transport block size. If a size of a first data packet is greater than the transport block size, the first protocol layer segments the first data packet based on the transport block size, to obtain a plurality of first segmented data packets, and sends the plurality of first segmented data packets. The first data packet is a data packet received by the first protocol layer from a previous protocol layer. A size of the first segmented data packet is less than or equal to the transport block size.

Based on the first aspect, the communication method provided in this embodiment of this application can support the RFID system in segmenting data based on a segmentation mechanism. The first protocol layer of the terminal device can semi-statically determine the transport block size based on the obtained first information, and segment the data packet based on the transport block size, so that a network device does not need to frequently indicate the transport block size to the terminal device, and signaling overheads can be reduced when the data packet is segmented.

In a possible design, the first information includes the transport block size; or the first information includes an index value associated with the transport block size; or the first information includes rate information and time domain configuration information, where the rate information and the time domain configuration information are used to determine the transport block size.

Based on this possible design, the network device can include the transport block size in the first information in a semi-static configuration manner, and send the first information to the terminal device. During subsequent data transmission, the terminal device may send data to the network device based on the transport block size indicated by the first information. Compared with a case in which the network device needs to dynamically indicate the transport block size to the terminal device each time the terminal device performs data transmission, this example can prevent the network device from frequently indicating the transport block size to the terminal device, reducing signaling overheads.

In a possible design, the first information is carried in one or more of the following signaling: paging signaling, select signaling, a random access response, and contention resolution signaling.

Based on this possible design, the network device can simultaneously broadcast or multicast, to one or more terminal devices, the paging signaling and/or the select signaling that carry/carries the first information, to configure a transport block size for more than one terminal device. The network device may alternatively configure, for each terminal device by using the random access response and the contention resolution signaling, a transport block size corresponding to each terminal device, to better adapt to a data transmission process of each terminal device, and improve performance of a communication system.

In a possible design, the first protocol layer is one or more of the following: a service data adaptation protocol SDAP layer, a packet data convergence protocol PDCP layer, a radio link control RLC layer, and a media access control MAC layer.

In a possible design, a header of the first segmented data packet includes one or more of the following: first indication information, second indication information, third indication information, and a segment sequence number, where the first indication information indicates that the first segmented data packet is a 1^{st} segmented data packet in the plurality of first segmented data packets, or indicates that the first segmented data packet is an intermediate segmented data packet in the plurality of first segmented data packets, or indicates that the first segmented data packet is a last segmented data packet in the plurality of first segmented data packets; the second indication information indicates whether the first segmented data packet is a data packet obtained through segmentation; the third indication information indicates whether the first segmented data packet is a deliverable data packet; and the segment sequence number indicates a sequence number of the first segmented data packet in the plurality of first segmented data packets.

Based on this possible design, the network device can determine, based on the first indication information or the second indication information, whether the currently received first segmented data packet is the last first segmented data packet. If the currently received first segmented data packet is the last first segmented data packet, the network device may assemble the currently received first segmented data packet and a buffered data packet, and then deliver an assembled data packet to the previous protocol layer. If the currently received first segmented data packet is not the last first segmented data packet, the network device may buffer the currently received first segmented data packet, continue to receive a next first segmented data packet sent by the terminal device until the last first segmented data packet is received, assemble the last first segmented data packet and the buffered data packet, and deliver an assembled data packet to the previous protocol layer. This ensures data integrity and improves performance of the communication system.

In addition, the terminal device sets the segment sequence number for each first segmented data packet, so that the network device can determine, based on the segment sequence numbers of the received first segmented data packets, whether a packet loss occurs. If the segment sequence numbers are continuous, it indicates that no packet loss occurs. If the segment sequence numbers are discontinuous, it indicates that a first segmented data packet whose segment sequence number is missing is lost. When a data packet is lost, the terminal device may perform retransmission, to ensure reliability of data transmission.

In a possible design, a header of the first segmented data packet includes one or more of the following: first indication information, second indication information, third indication information, a packet sequence number, and a specific location of the segmented data packet in the original data packet.

For meanings of the first indication information, the second indication information, and the third indication information, refer to the foregoing possible designs. Details are not described again. For descriptions of the packet sequence number and the specific location of the segmented data packet in the original data packet, refer to definitions in the RLC protocol in the 3GPP technology, for example, refer to related descriptions of a sequence number SN and a segment offset SO. Alternatively, extended definitions may be made, but fewer bits are used for representation.

For example, the packet sequence number may be a sequence number of a data packet before the data packet is segmented or a sequence number of a data packet sorted for a to-be-segmented data packet. The specific location of the segmented data packet in the original data packet may be a start byte quantity and a length of the segmented data packet in the original data packet, or start bit data and a length, or include only a start location but not a length field. For example, the original data packet is 100 bytes. The specific location of the segmented data packet in the original data packet may be a 50^{th} byte, and a length of the segmented data packet is 10 bytes.

In a possible design, the terminal device sends fourth indication information to a network device, where the fourth indication information indicates that the first segmented data packet is a last segmented data packet in the plurality of first segmented data packets, or indicates that the first segmented data packet is a deliverable data packet, or indicates that data packet delivery is completed.

Based on this possible design, compared with adding, by the terminal device, one or more of the first indication information, the second indication information, the third indication information, and the segment sequence number to the header of each first segmented data packet, the terminal device sends the fourth indication information when sending the last first segmented data packet to the network device, so that additional indication information does not need to be set for each first segmented data packet, thereby reducing signaling overheads. The network device may determine, based on the fourth indication information, that receiving of the data packet is completed, and then deliver the received or buffered data packet to the previous protocol layer, to ensure integrity and reliability of data transmission.

In a possible design, the fourth indication information is carried in the last first segmented data packet in the plurality of first segmented data packets.

In a possible design, the fourth indication information and the last first segmented data packet in the plurality of first segmented data packets are in a same slot.

In a possible design, the fourth indication information is carried in one or more of the following signaling: media access control control element MAC CE signaling and a control protocol data unit PDU.

Based on the foregoing three possible designs, various feasible solutions are provided for designing the fourth indication information, to improve design flexibility.

In a possible design, the first protocol layer of the terminal device pads the first segmented data packet, where a quantity of bits of a padded first segmented data packet is an integer multiple of a first bit quantity; and the terminal device sends the padded first segmented data packet.

In a possible design, the padded first segmented data packet includes length information, and the length information indicates a padding length.

Based on the foregoing two possible designs, if the first segmented data packets are not byte-aligned, the terminal device may further perform byte alignment on the first segmented data packets, so that a bottom layer processes the first segmented data packets based on a byte granularity, to match processing logic of the bottom layer.

In a possible design, the first protocol layer obtains a second segmented data packet from the network device, where the second segmented data packet is one of a plurality of second segmented data packets obtained by the network device by segmenting a second data packet; and if the second segmented data packet is a last second segmented data packet in the plurality of second segmented data packets or a deliverable data packet, the first protocol layer delivers the second segmented data packet and a buffered data packet to the previous protocol layer, where the buffered data packet includes a data packet received before the second segmented data packet; or if the second segmented data packet is not a last second segmented data packet in the plurality of second segmented data packets or a deliverable data packet, the first protocol layer receives a next second segmented data packet.

Based on this possible design, when sending the second data packet to the terminal device, the network device may also segment the second data packet based on the transport block size, and send the segmented data packets to the terminal device in a downlink slot.

According to a second aspect, an embodiment of this application provides a communication method. The method is applied to a radio frequency identification RFID scenario. The method may include: A network device sends first information to a terminal device, where the first information indicates a transport block size, and the transport block size is used for data segmentation. The network device obtains a plurality of first segmented data packets from the terminal device, where a size of the first segmented data packet is less than or equal to the transport block size.

Based on the second aspect, the communication method provided in this embodiment of this application can support an RFID system in segmenting data based on a segmentation mechanism. The network device may indicate the transport block size to the terminal device in a semi-static manner by using the first information, and the terminal device segments the data packet based on the transport block size, so that the network device does not need to frequently indicate the transport block size to the terminal device, and signaling overheads can be reduced when the data packet is segmented.

In a possible design, the first information includes the transport block size; or the first information includes an index value associated with the transport block size; or the first information includes rate information and time domain configuration information, where the rate information and the time domain configuration information are used to determine the transport block size.

In a possible design, the first information is carried in one or more of the following signaling: paging signaling, select signaling, a random access response, and contention resolution signaling.

Based on this possible design, the network device can simultaneously broadcast or multicast, to one or more terminal devices, the paging signaling and/or the select signaling that carry/carries the first information, to configure a transport block size for more than one terminal device. The network device may alternatively configure, for each terminal device by using the random access response and the contention resolution signaling, a transport block size corresponding to each terminal device, to better adapt to a data transmission process of each terminal device, and improve performance of a communication system.

In a possible design, if the first segmented data packet is not a last first segmented data packet in the plurality of first segmented data packets, the network device receives a next first segmented data packet.

Based on this possible design, if the first segmented data packet is not the last first segmented data packet in the plurality of first segmented data packets, the network device may buffer the currently received first segmented data packet. When the network device receives the last first segmented data packet, the network device may deliver the received first segmented data packet and the buffered data packet to a previous protocol layer, to ensure integrity of the data packet and improve communication performance.

In a possible design, a header of the first segmented data packet includes one or more of the following: first indication information, second indication information, third indication information, and a segment sequence number, where the first indication information indicates that the first segmented data packet is a 1^{st} segmented data packet in the plurality of first segmented data packets, or indicates that the first segmented data packet is an intermediate segmented data packet in the plurality of first segmented data packets, or indicates that the first segmented data packet is the last segmented data packet in the plurality of first segmented data packets; the second indication information indicates whether the first segmented data packet is a data packet obtained through segmentation; the third indication information indicates whether the first segmented data packet is a deliverable data packet; and the segment sequence number indicates a sequence number of the first segmented data packet in the plurality of first segmented data packets.

Based on this possible design, the network device can determine, based on the first indication information or the second indication information, whether the currently received first segmented data packet is the last first segmented data packet. If the currently received first segmented data packet is the last first segmented data packet, the network device may assemble the currently received first segmented data packet and a buffered data packet, and then deliver an assembled data packet to the previous protocol layer. If the currently received first segmented data packet is not the last first segmented data packet, the network device may buffer the currently received first segmented data packet, continue to receive a next first segmented data packet sent by the terminal device until the last first segmented data packet is received, assemble the last first segmented data packet and the buffered data packet, and deliver an assembled data packet to the previous protocol layer. This ensures data integrity and improves performance of the communication system.

In addition, the network device may further determine, based on the segment sequence number, whether a packet loss occurs. If the segment sequence numbers are continuous, it indicates that no packet loss occurs. If the segment sequence numbers are discontinuous, it indicates that a first segmented data packet whose segment sequence number is missing is lost. When a data packet is lost, the terminal device may be indicated to perform retransmission, to ensure reliability of data transmission.

In a possible design, the network device receives fourth indication information from the terminal device, where the fourth indication information indicates that the first segmented data packet is the last segmented data packet in the plurality of first segmented data packets, or indicates that the first segmented data packet is a deliverable data packet, or indicates that data packet delivery is completed.

Based on this possible design, compared with adding one or more of the first indication information, the second indication information, the third indication information, and the segment sequence number to the header of each first segmented data packet, the fourth indication information is sent when the last first segmented data packet is sent to the network device, so that additional indication information does not need to be set for each first segmented data packet, thereby reducing signaling overheads. The network device may determine, based on the fourth indication information, that receiving of the data packet is completed, and then deliver the received or buffered data packet to the previous protocol layer, to ensure integrity and reliability of data transmission.

In a possible design, the fourth indication information is carried in the last first segmented data packet in the plurality of first segmented data packets.

In a possible design, the fourth indication information and the last first segmented data packet in the plurality of first segmented data packets are in a same slot.

In a possible design, the fourth indication information is carried in one or more of the following signaling: media access control control element MAC CE signaling and a control protocol data unit PDU.

Based on the foregoing three possible designs, various feasible solutions are provided for designing the fourth indication information, to improve design flexibility.

In a possible design, the first segmented data packet is a data packet obtained through padding performed by the terminal device, and a size of the padded first segmented data packet is a multiple of first bits.

In a possible design, the padded first segmented data packet includes length information, and the length information indicates a padding length.

Based on the foregoing two possible designs, if the first segmented data packets are not byte-aligned, byte alignment may be performed on the first segmented data packets, so that a bottom layer processes the first segmented data packets based on a byte granularity, to match processing logic of the bottom layer.

In a possible design, if a size of a second data packet is greater than the transport block size, a first protocol layer of the network device segments the second data packet based on the transport block size, to obtain a plurality of second segmented data packets, where the second segmented data packet is a data packet received by the first protocol layer of the network device from a previous protocol layer, and a size of the second segmented data packet is less than or equal to the transport block size; and the network device sends the plurality of second segmented data packets to the terminal device.

Based on this possible design, when sending the second data packet to the terminal device, the network device may also segment the second data packet based on the transport block size, and send the segmented data packets to the terminal device in a downlink slot.

According to a third aspect, an embodiment of this application provides a communication apparatus. The communication apparatus may be used in the terminal device in the first aspect or the possible designs of the first aspect, to implement a function performed by the terminal device. The communication apparatus may be a terminal device, or may be a chip, a system-on-chip, or the like of a terminal device. The communication apparatus may perform, by hardware or by hardware executing corresponding software, the function performed by the terminal device. The hardware or the software includes one or more modules corresponding to the foregoing function, for example, a transceiver module and a processing module. The transceiver module may be configured to obtain first information that indicates a transport block size. The processing module is configured to: if a size of a first data packet is greater than the transport block size, segment the first data packet based on the transport block size, to obtain a plurality of first segmented data packets. The transceiver module is further configured to send the plurality of first segmented data packets. The first data packet is a data packet received by a first protocol layer from a previous protocol layer. A size of the first segmented data packet is less than or equal to the transport block size.

In a possible design, the first information includes the transport block size; or the first information includes an index value associated with the transport block size; or the first information includes rate information and time domain configuration information, where the rate information and the time domain configuration information are used to determine the transport block size.

In a possible design, the first information is carried in one or more of the following signaling: paging signaling, select signaling, a random access response, and contention resolution signaling.

In a possible design, the first protocol layer is one or more of the following: a service data adaptation protocol SDAP layer, a packet data convergence protocol PDCP layer, a radio link control RLC layer, and a media access control MAC layer.

In a possible design, a header of the first segmented data packet includes one or more of the following: first indication information, second indication information, third indication information, and a segment sequence number, where the first indication information indicates that the first segmented data packet is a 1^{st} segmented data packet in the plurality of first segmented data packets, or indicates that the first segmented data packet is an intermediate segmented data packet in the plurality of first segmented data packets, or indicates that the first segmented data packet is a last segmented data packet in the plurality of first segmented data packets; the second indication information indicates whether the first segmented data packet is a data packet obtained through segmentation; the third indication information indicates whether the first segmented data packet is a deliverable data packet; and the segment sequence number indicates a sequence number of the first segmented data packet in the plurality of first segmented data packets.

In a possible design, a header of the first segmented data packet includes one or more of the following: first indication information, second indication information, third indication information, a packet sequence number, and a specific location of the segmented data packet in the original data packet.

In a possible design, the transceiver module is further configured to send fourth indication information to a network device, where the fourth indication information indicates that the first segmented data packet is a last segmented data packet in the plurality of first segmented data packets, or indicates that the first segmented data packet is a deliverable data packet, or indicates that data packet delivery is completed.

In a possible design, the fourth indication information is carried in the last first segmented data packet in the plurality of first segmented data packets.

In a possible design, the fourth indication information and the last first segmented data packet in the plurality of first segmented data packets are in a same slot.

In a possible design, the fourth indication information is carried in one or more of the following signaling: media access control control element MAC CE signaling and a control protocol data unit PDU.

In a possible design, the processing module is further configured to pad the first segmented data packet, where a quantity of bits of a padded first segmented data packet is an integer multiple of a first bit quantity; and the transceiver module is further configured to send the padded first segmented data packet.

In a possible design, the padded first segmented data packet includes length information, and the length information indicates a padding length.

In a possible design, the transceiver module is further configured to obtain a second segmented data packet from the network device, where the second segmented data packet is one of a plurality of second segmented data packets obtained by the network device by segmenting a second data packet; and the processing module is further configured to: if the second segmented data packet is a last second segmented data packet in the plurality of second segmented data packets or a deliverable data packet, deliver the second segmented data packet and a buffered data packet to the previous protocol layer, where the buffered data packet includes a data packet received before the second segmented data packet; or if the second segmented data packet is not a last second segmented data packet in the plurality of second segmented data packets or a deliverable data packet, receive, by the first protocol layer, a next second segmented data packet.

It should be noted that the modules in the third aspect or the possible designs of the third aspect can perform the corresponding functions in the method examples in the first aspect. For details, refer to the detailed descriptions in the method examples. For beneficial effects, refer to the related descriptions in the first aspect. Details are not described herein again.

According to a fourth aspect, an embodiment of this application provides a communication apparatus. The communication apparatus may be used in the network device in the second aspect or the possible designs of the second aspect, to implement a function performed by the network device. The communication apparatus may be a network device, or may be a chip, a system-on-chip, or the like of a network device. The communication apparatus may perform, by hardware or by hardware executing corresponding software, the function performed by the network device. The hardware or the software includes one or more modules corresponding to the foregoing function, for example, a transceiver module and a processing module. The processing module is configured to generate first information. The transceiver module is configured to send the first information to a terminal device. The first information indicates a transport block size, and the transport block size is used for data segmentation. The transceiver module is further configured to obtain a plurality of first segmented data packets from the terminal device. A size of the first segmented data packet is less than or equal to the transport block size.

In a possible design, the first information includes the transport block size; or the first information includes an index value associated with the transport block size; or the first information includes rate information and time domain configuration information, where the rate information and the time domain configuration information are used to determine the transport block size.

In a possible design, the first information is carried in one or more of the following signaling: paging signaling, select signaling, a random access response, and contention resolution signaling.

In a possible design, the transceiver module is further configured to: if the first segmented data packet is not a last first segmented data packet in the plurality of first segmented data packets, receive a next first segmented data packet.

In a possible design, a header of the first segmented data packet includes one or more of the following: first indication information, second indication information, third indication information, and a segment sequence number, where the first indication information indicates that the first segmented data packet is a 1^{st} segmented data packet in the plurality of first segmented data packets, or indicates that the first segmented data packet is an intermediate segmented data packet in the plurality of first segmented data packets, or indicates that the first segmented data packet is the last segmented data packet in the plurality of first segmented data packets; the second indication information indicates whether the first segmented data packet is a data packet obtained through segmentation; the third indication information indicates whether the first segmented data packet is a deliverable data packet; and the segment sequence number indicates a sequence number of the first segmented data packet in the plurality of first segmented data packets.

In a possible design, the transceiver module is further configured to receive fourth indication information from the terminal device, where the fourth indication information indicates that the first segmented data packet is the last segmented data packet in the plurality of first segmented data packets, or indicates that the first segmented data packet is a deliverable data packet, or indicates that data packet delivery is completed.

In a possible design, the fourth indication information is carried in the last first segmented data packet in the plurality of first segmented data packets.

In a possible design, the fourth indication information and the last first segmented data packet in the plurality of first segmented data packets are in a same slot.

In a possible design, the fourth indication information is carried in one or more of the following signaling: media access control control element MAC CE signaling and a control protocol data unit PDU.

In a possible design, the first segmented data packet is a data packet obtained through padding performed by the terminal device, and a size of the padded first segmented data packet is a multiple of first bits.

In a possible design, the padded first segmented data packet includes length information, and the length information indicates a padding length.

In a possible design, the processing module is further configured to: if a size of a second data packet is greater than the transport block size, segment the second data packet based on the transport block size, to obtain a plurality of second segmented data packets, where the second segmented data packet is a data packet received by a first protocol layer of a network device from a previous protocol layer, and a size of the second segmented data packet is less than or equal to the transport block size. The transceiver module is further configured to send the plurality of second segmented data packets to the terminal device.

It should be noted that the modules in the third aspect or the possible designs of the third aspect can perform the corresponding functions in the method examples in the second aspect. For details, refer to the detailed descriptions in the method examples. For beneficial effects, refer to the related descriptions in the second aspect. Details are not described herein again.

According to a fifth aspect, an embodiment of this application provides a communication apparatus. The communication apparatus includes one or more processors. The one or more processors are configured to run a computer program or instructions. When the one or more processors execute the computer program or the instructions, the communication apparatus is enabled to perform the communication method according to any one of the first aspect and the second aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces. The one or more communication interfaces are coupled to the one or more processors, and the one or more communication interfaces are configured to communicate with a module other than the communication apparatus.

According to a sixth aspect, an embodiment of this application provides a communication apparatus. The communication apparatus includes an input/output interface and a logic circuit. The input/output interface is configured to input and/or output information. The logic circuit is configured to perform the communication method according to any one of the first aspect and the second aspect, to perform processing based on information and/or generate information.

According to a seventh aspect, an embodiment of this application provides a computer-readable storage medium. The computer-readable storage medium stores computer instructions or a program. When the computer instructions or the program is run on a computer, the communication method according to any one of the first aspect and the second aspect is performed.

According to an eighth aspect, an embodiment of this application provides a computer program product including computer instructions. When the computer program product is run on a computer, the communication method according to any one of the first aspect and the second aspect is performed.

According to a ninth aspect, an embodiment of this application provides a computer program. When the computer program is run on a computer, the communication method according to any one of the first aspect and the second aspect is performed.

For technical effects brought by any one of the designs of the fifth aspect to the ninth aspect, refer to the technical effects brought by any one of the first aspect and the second aspect.

According to a tenth aspect, a communication system is provided. The communication system may include the terminal device according to the third aspect and the network device according to the fourth aspect.

### BRIEF DESCRIPTION OF DRAWINGS

FIG. 1 is a flowchart of performing selection, inventory, and access on a tag by a reader according to an embodiment of this application;
FIG. 2 is a diagram of a time sequence of inventory and access according to an embodiment of this application;
FIG. 3 is a diagram of a preamble according to an embodiment of this application;
FIG. 4 is a diagram of an end symbol according to an embodiment of this application;
FIG. 5 is a diagram of a segmentation format according to an embodiment of this application;
FIG. 6 is a diagram of a slot configuration according to an embodiment of this application;
FIG. 7 is a diagram of a communication system according to an embodiment of this application;
FIG. 8 is a diagram of a communication system according to an embodiment of this application;
FIG. 9 is a diagram of a user plane protocol stack according to an embodiment of this application;
FIG. 10 is a diagram of composition of a communication apparatus according to an embodiment of this application;
FIG. 11 is a flowchart of a communication method according to an embodiment of this application;
FIG. 12 is a flowchart of a communication method according to an embodiment of this application;
FIG. 13 is a diagram of a frame structure of segmenting a first data packet according to an embodiment of this application;
FIG. 14 is a diagram of a frame structure of segmenting a first data packet according to an embodiment of this application;
FIG. 15 is a diagram of a frame structure of segmenting a first data packet according to an embodiment of this application;
FIG. 16 is a diagram of a frame structure of padding a first data packet according to an embodiment of this application;
FIG. 17 is a flowchart of a communication method according to an embodiment of this application;
FIG. 18 is a diagram of composition of a terminal device according to an embodiment of this application;
FIG. 19 is a diagram of composition of a network device according to an embodiment of this application; and
FIG. 20 is a diagram of composition of a communication apparatus according to an embodiment of this application.

### DESCRIPTION OF EMBODIMENTS

Before embodiments of this application are described, technical terms used in embodiments of this application are described.

**Radio frequency identification (radio frequency identification, RFID) technology:** It is a non-contact automatic identification technology, and is mainly used for identity identification and user data reading and writing. An RFID system may generally include a reader (Reader) and a tag (Tag).

Tag: It may also be referred to as an electronic tag or an RFID tag, and may be classified into a passive tag, a semi-active tag, and an active tag. Working energy of the passive tag may be provided by the reader. For example, a part of energy of a continuous wave (continuous wave, CW) sent by the reader may be used for internal processing such as encoding/decoding and modulation/demodulation of the tag. In addition, the continuous wave may be further used as a carrier to carry uplink information of the tag. The passive tag may also be referred to as a passive internet of things (passive internet of things, passive IoT) device. A battery may be included inside a semi-passive tag. Internal processing such as encoding/decoding and modulation/demodulation may be powered by the battery, but the continuous wave of the reader still needs to be used as a carrier.

The tag is simply designed, in which an application layer and air interface signaling may be mixed together to support microwatt-level or 100-microwatt-level power consumption. The tag may perform encoding/decoding and transmission based on an on-off-keying (on-off-keying, OOK) modulation scheme, for example, decode data based on an amplitude modulation scheme and a high/low level. When a plurality of tags communicate with each other, a time division multiplexing manner may be used, and the plurality of tags use a serial reading manner. Because the tags do not support differentiation between a frequency domain and a code domain, parallel performance of the tags is poor.

**Reader:** It is a device having a read/write function, for example, may be a handheld or fixed device for reading or writing tag information. Alternatively, the reader may be understood as a device communicating with a tag. For example, in a separated architecture, the reader may include a helper (helper) and a receiver (receiver). Downlink communication may be performed between the helper and the tag, and uplink/downlink communication may be performed between the helper and the receiver through an air interface or a wired connection. The helper may also be referred to as an excitation source.

In the RFID system, the reader may perform operations such as selection (selection), inventory (inventory), and access (access) on the tag. The selection operation is for selecting one tag or a group of tags for inventory and access. The inventory operation may be understood as a process in which the reader identifies the tag, and an inventory rate of the RFID tag is an important performance indicator. The access operation may be understood as a process in which the reader interacts with the tag. The tag needs to be identified by the reader and then accessed.

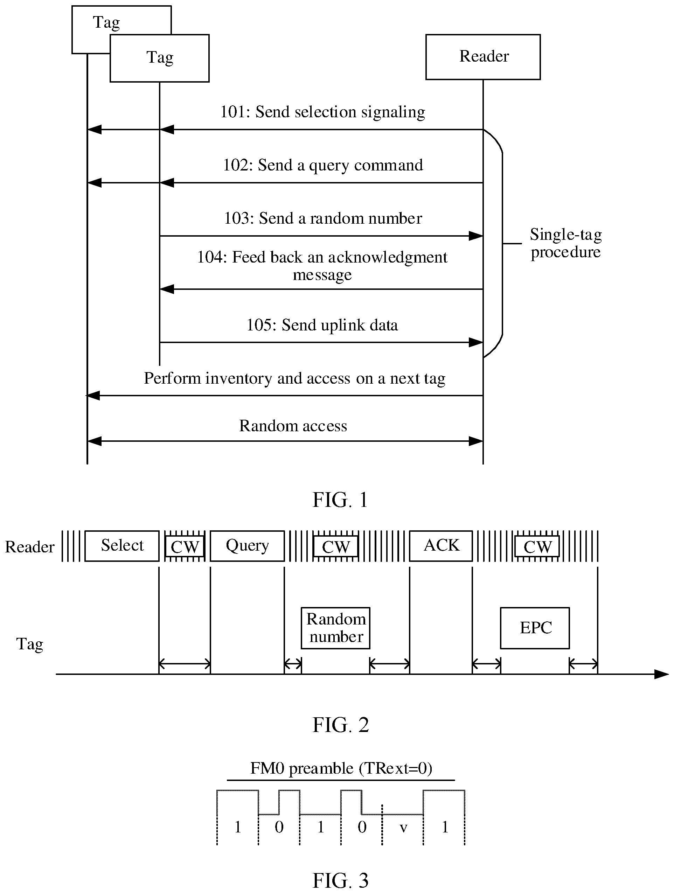

For example, a procedure in which the reader performs selection, inventory, and access on the tag may be shown in FIG. 1. Refer to FIG. 1. The procedure includes the following steps.

Step 101: The reader sends select (Select) signaling.

The select signaling may be used to select one tag or a group of tags.

For example, the select signaling may include memory information, and a tag with data consistent with a mask value is the tag selected by using the select signaling, where the data is stored in a storage area indicated by the memory information. The mask value may be indicated in the select signaling.

Step 102: The reader sends a query (Query) command.

The query command may indicate a type of inventory flag bit (for example, Sx, where Sx may be 0, 1, 2, or 3) and a status X (where X may be A or B) of the inventory flag bit, which indicates that the reader selects the inventory flag bit Sx whose status is X in the tag to participate in inventory and access.

The query command may further include a random access resource configuration, and the tag performs random access based on the random access configuration.

For example, the random access resource configuration may include a maximum access slot range.

For a plurality of tags selected by the reader, inventory and access may be performed in a time division multiplexing manner. To be specific, after inventory and access on a tag is ended, the reader starts to perform inventory and access on a next tag. The following steps are described by using inventory and access on one tag as an example.

Step 103: The tag sends a random number (random number, RN) to the reader.

For example, the random number may be a 16-bit random number (RN16).

If a tag matches a selection of the reader, in other words, the tag is selected by the reader, and a status of an inventory flag bit Sx of the tag is consistent with the status of the inventory flag bit Sx indicated by the query command, the tag may send the random number to the reader.

The tag may send the random number to the reader in a time division access manner.

Step 104: The reader feeds back an acknowledgment (acknowledgment, ACK) message to the tag.

If the reader successfully receives the random number sent by the tag, the reader may send the acknowledgment message to the tag. The acknowledgment message may include the random number sent by the tag to the reader.

After receiving, within specified time, the acknowledgment message that carries the random number sent by the tag, the tag may perform step 105.

Step 105: The tag sends uplink data to the reader.

For example, the uplink data may be an electronic product code (electronic product code, EPC).

Optionally, after step 105, the reader may further send an instruction to the tag, perform an operation such as reading or writing on the tag, and interact with the tag. After receiving the instruction, the tag may respond to the instruction.

After the inventory and access on the current tag is ended, the reader may perform inventory and access on a next tag with reference to step 101 to step 105, and the next tag performs random access according to the query command sent by the reader.

Optionally, as shown in FIG. 2, before the foregoing process starts and when the reader performs a receiving action in the foregoing process, the reader may send a monophonic signal, a charged CW, an excitation signal, or the like, to provide energy and a carrier for the tag.

In addition, when the tag performs data transmission with the reader, both a frequency and time are exclusive to the reader. Therefore, when the tag communicates with the reader, a complete data packet may be sent, and a preamble and an end symbol of each data packet are indicated for the data packet.

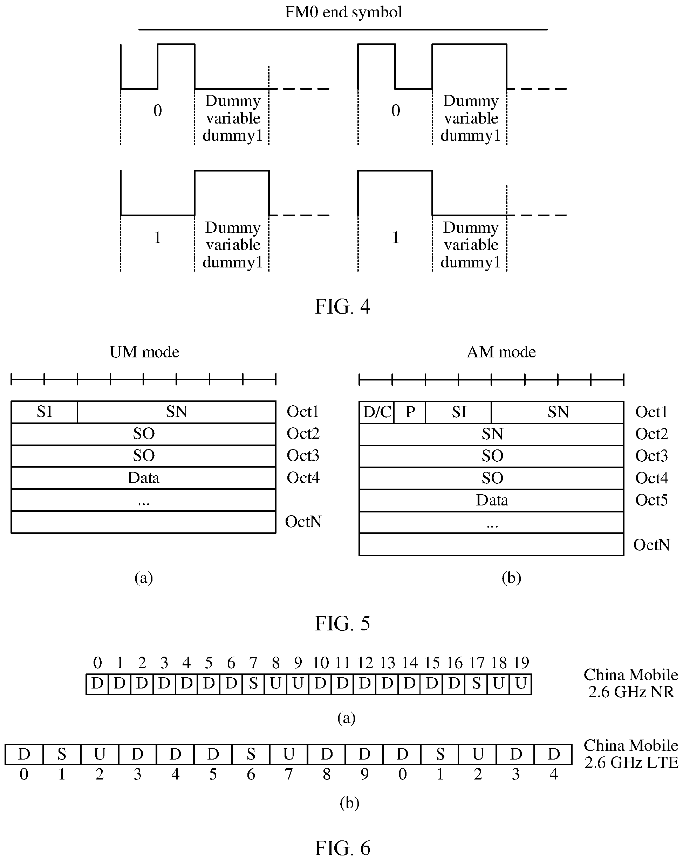

For example, a start preamble of uplink data may be an FM0 preamble shown in FIG. 3, and an end symbol of downlink data may be an FM0 end symbol shown in FIG. 4. FM0 is a linear code.

**Radio link control (radio link control, RLC) working mode:** It may include a transparent mode (transparent mode, TM), an unacknowledged mode (unacknowledged mode, UM), and an acknowledged mode (acknowledged mode, AM). In wireless communication, after a terminal device enters a connected mode, when a service needs to be transmitted, a network device may configure a radio bearer for the terminal device for transmitting the service. A configuration of the radio bearer may include configuration information of RLC. Based on a quality of service (quality of service, QoS) requirement of a service, RLC may be configured as any one of the foregoing working modes.

The TM mode may correspond to a TM RLC entity, which is referred to as a TM entity for short. In this mode, it may be considered that RLC does not perform any processing, but only provides a data pass-through (pass through) function.

The UM mode may correspond to a UM RLC entity, which is referred to as a UM entity for short. This mode provides all RLC functions except retransmission and re-segmentation. However, transmission reliability is low because there is no retransmission function even if an error occurs on data packet transmission.

The AM mode may correspond to an AM RLC entity, which is referred to as an AM entity for short. The AM mode provides a reliable transmission service through error detection and retransmission. The AM mode can provide all RLC functions, such as an automatic repeat request (automatic repeat request, ARQ) function.

For the UM mode, when RLC is configured as UM RLC, if an RLC service data unit (service data unit, SDU) is not segmented when being sent, no sequence number (sequence number, SN) needs to be added to a header of an RLC protocol data unit (protocol data unit, PDU) including a complete RLC SDU. If the RLC SDU is segmented when being sent, SNs need to be added to the header of the RLC PDU including RLC SDU segments. This is because if a PDU includes a complete SDU, after receiving the PDU, an RLC layer of a receive end may directly deliver the PDU to an upper layer without reading an SN. However, for a PDU including SDU segments, the receive end needs to determine, based on SNs in a header, SDU segments that belong to a same complete SDU, to assemble the SDU segments.

For example, a segmentation format of the UM mode may be shown in (a) in FIG. 5. The RLC SDU obtained through segmentation may include a signal integrity (signal integrity, SI) field, an SN field, a segment offset (segment offset, SO) field, and a data (data) field.

In addition to the functions of the UM mode, the AM mode further supports an ARQ retransmission mechanism and a re-segmentation mechanism. Each data packet has a data packet sequence number. When AM RLC sends an AMD PDU including one segment of one RLC SDU, an SN of the PDU may be set to the SN corresponding to the RLC SDU. Under a specific condition, a receiver triggers sending of an RLC layer status report, to indicate whether a data packet is successfully transmitted. For an RLC PDU that fails to be transmitted, a sender performs retransmission. In a retransmission process, the to-be-retransmitted RLC PDU may be further segmented.

For example, a segmentation format of the AM mode may be shown in (b) in FIG. 5. The RLC SDU obtained through segmentation may include a data PDU or control PDU (data PDU/control PDU, D/C) field, a poll (poll, P) indication field, an SI field, an SN field, an SO field, and a data (data) field.

Based on the foregoing descriptions of data segmentation, in a new radio (new radio, NR) communication system, transmission of a data packet or a transport block (transport block, TB) may be based on dynamic scheduling, and a media access control (media access control, MAC) layer may determine, based on different logical channel priorities, a size of an allocated resource and indicate the size to an RLC layer, and the RLC layer segments data.

In a communication system, operators have different deployments on different frequencies. For a time division duplex (time division duplex, TDD) network, uplink transmission and downlink transmission may be distinguished by using slots. An uplink slot (for example, a U slot) may be used for the uplink transmission, and a downlink slot (for example, a D slot) may be used for the downlink transmission.

For example, an operator is China Mobile, a slot configuration of an NR communication system at 2.6 GHz may be shown in (a) in FIG. 6, and a slot configuration of a long term evolution (long term evolution, LTE) communication system at 2.6 GHz may be shown in (b) in FIG. 6. D represents a downlink slot, U represents an uplink slot, and S represents a special slot.

To match a slot configuration of a TDD network, data may be generally segmented, and segmented data is transmitted in a slot, to complete data transmission in a specified U/D slot.

However, for an RFID system, both a frequency and time are exclusive to the reader. During communication between the tag and the reader, a complete data packet may be sent. In other words, the RFID system does not have a segmentation mechanism.

Because a data transmission rate of the RFID system is generally low, for example, several Kbps or dozens of Kbps, a plurality of slots may need to be continuously occupied during data transmission. Because the RFID system does not have a segmentation mechanism, the RFID system cannot match the slot configuration of the TDD network. Consequently, the data transmission cannot be performed in the U/D slot specified by the TDD network. In addition, when the RFID system performs large-packet transmission, if a transmission failure occurs, entire retransmission is required, resulting in high signaling overheads.

Based on this, the RFID system may segment data with reference to a segmentation mechanism in the foregoing NR communication system. However, the segmentation mechanism in the NR communication system is complex, and segmentation overheads are high.

In conclusion, how to simplify the segmentation mechanism and reduce segmentation overheads when the RFID system supports the segmentation mechanism becomes an urgent technical problem to be resolved.

To resolve this problem, embodiments of this application provide a communication method, to support the RFID system in segmenting data based on the segmentation mechanism. A first protocol layer of a terminal device can semi-statically determine a transport block size based on obtained first information, and segment a data packet based on the transport block size, so that a network device does not need to frequently indicate the transport block size to the terminal device, and signaling overheads can be reduced when the data packet is segmented.

The following describes implementations of embodiments of this application in detail with reference to the accompanying drawings in this specification.

The communication method provided in embodiments of this application may be applied to any communication system. The communication system may be a 3rd generation partnership project (3rd generation partnership project, 3GPP) communication system like an RFID system, an LTE system, a 5th generation (5th generation, 5G) mobile communication system, an NR communication system, or a vehicle-to-everything (vehicle-to-everything, V2X) system. The communication method may be further applied to a system in which LTE and 5G hybrid networking is used, a non-terrestrial network (non-terrestrial network, NTN) system, a device-to-device (device-to-device, D2D) communication system, a machine to machine (machine to machine, M2M) communication system, an internet of things (internet of things, IoT) system, a universal mobile telecommunications system (universal mobile telecommunications system, UMTS), a code division multiple access (code division multiple access, CDMA) system, another next-generation communication system, for example, a future communication system like 6G, a non-3GPP communication system like a wireless local area network (wireless local area network, WLAN), and the like. This is not limited.

For example, the communication method provided in embodiments of this application may be applied to an ultra-low power consumption communication scenario, for example, a communication scenario in which power consumption is below a milliwatt level or at a microwatt level, for example, an RFID scenario or an X-IoT (where X may be a passive or semi-passive internet of things) scenario.

It should be noted that the foregoing communication systems and communication scenarios applicable to this application are merely examples for description, and communication systems applicable to this application are not limited thereto. This is uniformly described herein, and details are not described below again.

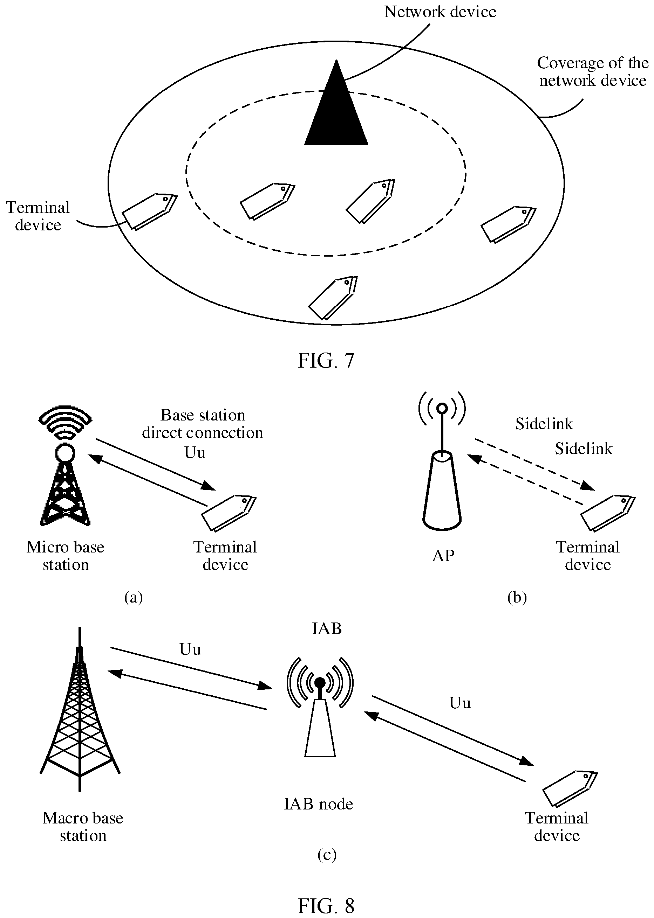

The following uses FIG. 7 as an example to describe a communication system provided in embodiments of this application.

FIG. 7 is a diagram of a communication system according to an embodiment of this application. As shown in FIG. 7, the communication system may include a terminal device and a network device.

In FIG. 7, the terminal device may be located within coverage of one or more cells (or carriers) provided by the network device, and there may be one or more cells serving the terminal device. When there are a plurality of cells serving the terminal device, the terminal device may operate in a carrier aggregation (carrier aggregation, CA), dual connectivity (dual connectivity, DC), or coordinated multipoint transmission manner, and at least one cell provides more than one numerology (numerology) and provides a radio resource for the terminal device.

The terminal device may perform air interface communication with the network device through an uplink (uplink, UL) or a downlink (downlink, DL). For example, the terminal device may send uplink data to the network device in an UL direction through a physical uplink shared channel (physical uplink shared channel, PUSCH); and the network device may send downlink data to the terminal device in a DL direction through a physical downlink shared channel (physical downlink shared channel, PDSCH).

Optionally, the terminal device may be a passive terminal device. To be specific, energy and a carrier that are needed when the terminal device works may be provided by the network device.

Optionally, the network device in this application may be used as a reader, or the network device may implement a function of the reader. The terminal device may be used as a tag, or the terminal device may be a device including the tag. The terminal device may also implement a function of the reader. The reader may be understood as another type of terminal device.

Optionally, the terminal device in FIG. 7 may be a device having a wireless transceiver function, or a chip or a chip system that may be disposed in the device, and may be configured to provide voice and/or data connectivity for a user. The terminal device may also be referred to as user equipment (user equipment, UE), a terminal (terminal), a mobile station (mobile station, MS), a mobile terminal (mobile terminal, MT), or the like. For example, the terminal device in FIG. 7 may be a handheld device or a vehicle-mounted device that has a wireless connection function, for example, a mobile phone (mobile phone), a tablet computer, a notebook computer, a palmtop computer, or a computer with a wireless transceiver function. The terminal device may alternatively be a mobile internet device (mobile internet device, MID), a wearable device, a virtual reality (virtual reality, VR) terminal, an augmented reality (augmented reality, AR) terminal, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a vehicle-mounted terminal, a vehicle having a vehicle-to-vehicle (vehicle-to-vehicle, V2V) communication capability, an intelligent connected vehicle, an uncrewed aerial vehicle with an uncrewed aerial vehicle-to-uncrewed aerial vehicle (UAV to UAV, U2U) communication capability, and the like. This is not limited.

Optionally, the network device in FIG. 7 may be any device that is deployed in an access network and that can perform wireless communication with the terminal device, and is mainly configured to implement functions such as radio physical control, resource scheduling and radio resource management, radio access control, and mobility management. Specifically, the network device may be a device supporting wired access, or may be a device supporting wireless access. For example, the network device may be an access network (access network, AN) device/a radio access network (radio access network, RAN) device, and includes a plurality of AN/RAN nodes. The AN/RAN node may be a NodeB (NodeB, NB), a macro base station, a micro base station, a relay station, an enhanced NodeB (enhance NodeB, eNB), a next generation NodeB (NR NodeB, gNB), a radio network controller (radio network controller, RNC), a base station controller (base station controller, BSC), a base transceiver station (base transceiver station, BTS), a home base station (for example, a home evolved NodeB (home evolved NodeB) or a home NodeB (home NodeB, HNB)), a baseband unit (baseband unit, BBU), an access point (access point, AP), a wireless fidelity AP (wireless fidelity AP, Wi-Fi AP), a transmission reception point (transmission reception point, TRP), a transmission point (transmission point, TP), a wireless relay node, a wireless backhaul node in integrated access and backhaul (integrated access and backhaul, IAB) (namely, an IAB node), another type of access node, reader, a read apparatus, or the like. This is not limited.

For example, the base stations in embodiments of this application may include base stations in various forms. As shown in (a) in FIG. 8, a base station may be a micro base station (Micro BS), and the micro base station may communicate with a terminal device through a Uu interface. As shown in (b) in FIG. 8, a base station may be an AP, and the AP may communicate with a terminal device through a sidelink (sidelink, SL). As shown in (c) in FIG. 8, a base station may be an IAB node, and the IAB node may communicate with a macro base station (Macro BS) through a Uu interface, and communicate with a terminal device through a Uu interface.

Optionally, the network device in FIG. 7 may alternatively be of a central unit (central unit, CU)/distributed unit (distributed unit, DU) architecture. In this case, the network device may include a CU, or include a DU, or include a CU and a DU. The network device including the CU and the DU may split protocol layers of an eNB in an LTE communication system. Functions of some protocol layers are controlled by the CU in a centralized manner. Functions of some or all of remaining protocol layers are distributed in the DU, and the CU controls the DU in a centralized manner.

Optionally, the network device in FIG. 7 may alternatively be of a control plane-user plane (control plane-user plane, CP-UP) architecture. In this case, the network device may include three network elements: a control plane of a CU (CU-CP), a user plane of the CU (CU-UP), and a DU. This is not limited.

Based on the foregoing descriptions of the network device and the terminal device, the network device and the terminal device may communicate with each other based on a protocol stack. The protocol stack may include a control plane protocol stack and a user plane protocol stack.

The user plane protocol stack is used as an example. A structure of the user plane protocol stack may include a radio resource control (radio resource control, RRC) layer, a service data adaptation (service data adaptation protocol, SDAP) layer, a packet data convergence protocol (packet data convergence protocol, PDCP) layer, an RLC layer, a MAC layer, a physical layer (physical layer, PHY), and the like. The physical layer is located at a lowest layer (or described as a layer 1). The MAC layer, the RLC layer, the PDCP layer, and the SDAP layer belong to a second layer (or described as a layer 2). The RRC layer belongs to a third layer (or described as a layer 3).

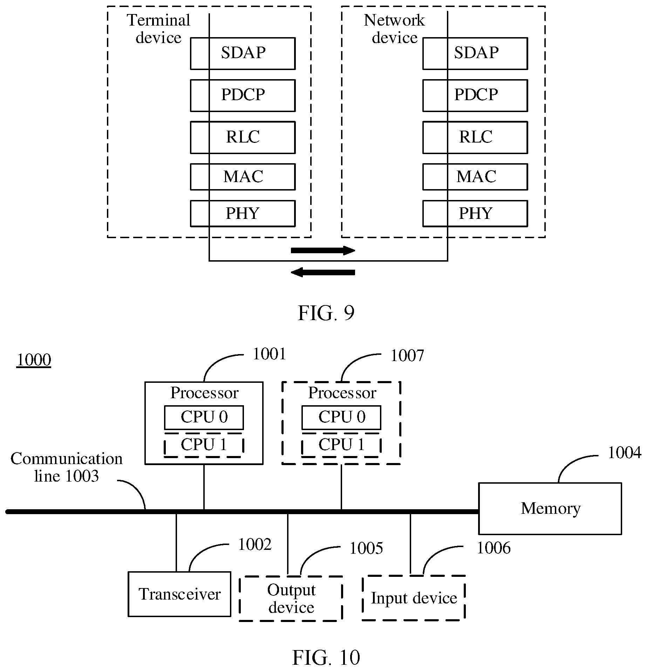

For example, as shown in FIG. 9, the SDAP layer and the PDCP layer are located above the MAC layer and the RLC layer, and data transmission may be performed from the terminal device to the network device, or may be performed from the network device to the terminal device. For example, data transmission is performed from the terminal device to the network device. Data first arrives at the SDAP layer of the terminal device, is mapped by the SDAP layer, and then is transmitted to a corresponding PDCP entity. After being processed by the PDCP layer of the terminal device, the data is transmitted to the RLC layer and the MAC layer. After being correspondingly processed, the data is sent from the physical layer, and transmitted to the network device through an air interface. The protocol layers of the network device sequentially perform corresponding processing on the received data in a processing sequence opposite to that of the terminal device. For a transmission process of transmitting data from the network device to the terminal device, refer to the foregoing transmission process of transmitting the data from the terminal device to the network device. Details are not described again.

On the network device side and the terminal device side, processing of a data packet at each layer may be combined and referred to as a radio bearer. Each piece of data in the radio bearer needs to be processed at each layer, and each layer has a corresponding functional entity or bearer to perform a corresponding function, for example, an SDAP entity at the SDAP layer, a PDCP entity at the PDCP layer, an RLC entity at the RLC layer (or described as an RLC bearer), and a MAC entity at the MAC layer.

It should be noted that the foregoing uses only FIG. 9 as an example to describe the user plane protocol stack, and does not constitute a limitation on a structure of the user plane protocol stack.

Optionally, the communication system further includes a core network element and a data network (data network, DN). The core network element may include a plurality of functional entities used for user management, data transmission, and network device configuration. For example, the core network element may include network elements such as a mobility management network element, a session management network element, and a user plane network element. This is not limited.

The mobility management network element may be an access and mobility management function (access and mobility management function, AMF). The session management network element may be a session management function (session management function, SMF). The user plane network element may be a user plane function (user plane function, UPF).

It should be noted that the terminal device, the network device, and the core network element in embodiments of this application each may be one or more chips, or may be a system on chip (system on chip, SoC), or the like. FIG. 7 is merely an example diagram, and a quantity of devices included in FIG. 7 is not limited. In addition, in addition to the devices shown in FIG. 7, the communication system may further include another device. Names of the devices and the links in FIG. 7 are not limited. In addition to the names shown in FIG. 7, the devices and the links may have other names. This is not limited.

For specific implementation, refer to FIG. 7 or FIG. 8. For example, both each terminal device and each network device may use a composition structure shown in FIG. 10, or include components shown in FIG. 10. FIG. 10 is a diagram of composition of a communication apparatus 1000 according to an embodiment of this application. The communication apparatus 1000 may be a terminal device, or a chip or a system on chip in the terminal device, or may be a network device, or a chip or a system on chip in the network device. As shown in FIG. 10, the communication apparatus 1000 includes a processor 1001, a transceiver 1002, and a communication line 1003.

Further, the communication apparatus 1000 may further include a memory 1004. The processor 1001, the memory 1004, and the transceiver 1002 may be connected through the communication line 1003.

The processor 1001 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 1001 may alternatively be another apparatus having a processing function, for example, a circuit, a component, or a software module. This is not limited.

The transceiver 1002 is configured to communicate with another device or another communication network. The another communication network may be an Ethernet, a radio access network (radio access network, RAN), a wireless local area network (wireless local area network, WLAN), or the like. The transceiver 1002 may be a module, a circuit, a transceiver, or any apparatus that can implement communication.

The communication line 1003 is configured to transfer information between components included in the communication apparatus 1000.

The memory 1004 is configured to store instructions. The instructions may be a computer program.

The memory 1004 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disk storage, an optical disk storage (including a compact disc, a laser disc, an optical disc, a digital versatile disc, a Blu-ray disc, and the like), a disk storage medium or another magnetic storage device, or the like. This is not limited.

It should be noted that the memory 1004 may exist independent of the processor 1001, or may be integrated with the processor 1001. The memory 1004 may be configured to store instructions, program code, some data, or the like. The memory 1004 may be located inside the communication apparatus 1000, or may be located outside the communication apparatus 1000. This is not limited. The processor 1001 is configured to execute the instructions stored in the memory 1004, to implement a communication method provided in the following embodiments of this application.

In an example, the processor 1001 may include one or more CPUs, for example, a CPU 0 and a CPU 1 in FIG. 10.

In an optional implementation, the communication apparatus 1000 includes a plurality of processors. For example, the communication apparatus 1000 may further include a processor 1007 in addition to the processor 1001 in FIG. 10.

In an optional implementation, the communication apparatus 1000 further includes an output device 1005 and an input device 1006. For example, the input device 1006 is a device like a keyboard, a mouse, a microphone, or a joystick, and the output device 1005 is a device like a display or a speaker (speaker).

It should be noted that the communication apparatus 1000 may be a desktop computer, a portable computer, a network server, a mobile phone, a tablet computer, a wireless terminal, an embedded device, a chip system, or a device having a structure similar to that in FIG. 10. In addition, the composition structure shown in FIG. 10 does not constitute a limitation on the communication apparatus. In addition to the parts shown in FIG. 10, the communication apparatus may include more or fewer parts than the parts shown in the figure, or some parts may be combined, or there may be a different part layout.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

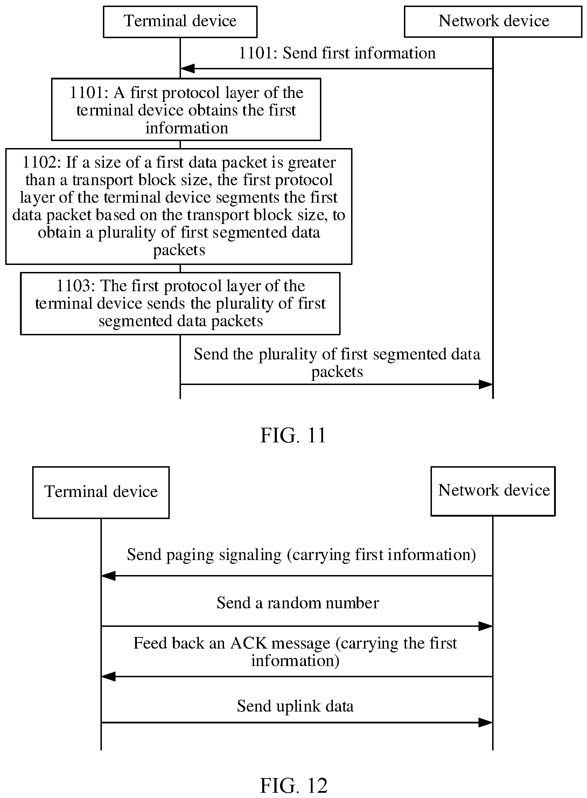

With reference to the communication system shown in FIG. 7 or FIG. 8, the communication method provided in embodiments of this application is described with reference to FIG. 11. A terminal device may be any terminal device in the communication system shown in FIG. 7 or FIG. 8, and a network device may be any network device in the communication system shown in FIG. 7 or FIG. 8. The terminal device and the network device described in the following embodiments each may have the components shown in FIG. 10. Processing performed by a single execution body (the terminal device or the network device) shown in embodiments of this application may alternatively be performed by a plurality of execution bodies. These execution bodies may be logically and/or physically separated. This is not limited. The network device in this application may alternatively be replaced with another type of terminal device.

FIG. 11 is a flowchart of a communication method according to an embodiment of this application. As shown in FIG. 11, the method may include the following steps.

Step 1101: A network device sends first information to a terminal device. Correspondingly, a first protocol layer of the terminal device obtains the first information.

The first protocol layer of the terminal device may be one or more of the following: an SDAP layer, a PDCP layer, an RLC layer, and a MAC layer.

Optionally, the first protocol layer may alternatively be a protocol layer newly defined in the future. This is not limited.

The first information may indicate a transport block size. The transport block size may also be described as a TB size (transport block size, TBS), or described as a maximum segment size, a segment block size, a segment size, or the like. This is not limited.

In a first example, the first information may include the transport block size.

The network device may include a specific value of the transport block size in the first information in a semi-static configuration manner, and send the first information to the terminal device. During subsequent data transmission, the terminal device may send data to the network device based on the transport block size indicated by the first information. Compared with a case in which the network device needs to dynamically indicate the transport block size to the terminal device each time the terminal device performs data transmission, this example can prevent the network device from frequently indicating the transport block size to the terminal device, reducing signaling overheads.

In a second example, the first information may include an index value associated with the transport block size.

An association relationship between a specific value of the transport block size and an index value may be predefined in a protocol. After determining the specific value of the transport block size, the network device may include the index value associated with the specific value of the transport block size in the first information in a semi-static configuration manner based on the association relationship predefined in the protocol, and send the first information to the terminal device. After obtaining the first information, the terminal device may determine, based on the association relationship predefined in the protocol, the specific value that is of the transport block size and that corresponds to the index value in the first information, and then perform data transmission based on the transport block size.

Compared with the first example in which the network device sends the specific value of the transport block size to the terminal device by using the first information, this example in which the index value is sent to the terminal device by using the first information can reduce signaling overheads of the first information, and can also prevent the network device from frequently indicating the transport block size to the terminal device.

In a third example, the first information may include rate information and time domain configuration information. The rate information and the time domain configuration information may be used to determine the transport block size.

The network device may indicate, to the terminal device, a communication parameter used to determine the transport block size. In other words, the first information includes the communication parameter used to determine the transport block size. The terminal device may determine a specific value of the transport block size based on the communication parameter indicated by the network device, and then perform data transmission based on the transport block size.

For example, the communication parameter that is indicated by the network device to the terminal device and that is used to determine the transport block size includes the rate information and the time domain configuration information. The terminal device may determine the specific value of the transport block size based on the rate information and the time domain configuration information.

The time domain configuration information may include a quantity of subframes, a quantity of slots, and the like. This is not limited.

For example, the time domain configuration information includes the quantity of subframes. Assuming that the rate information is 10 Kbps and the quantity of subframes is 3, the terminal device may determine that the specific value of the transport block size is 30 bits (bits).

Optionally, the communication parameter used to determine the transport block size may further include one or more of the following: a code rate, a modulation and coding scheme (modulation and coding scheme, MCS), and a modulation scheme.

Optionally, the communication parameter used to determine the transport block size may further include coefficient information of each communication parameter. This is not limited.

In a fourth example, different from the foregoing three examples in which the terminal device determines the transport block size based on the first information sent by the network device, the terminal device may alternatively determine a specific value of the transport block size according to a protocol.

For example, the specific value of the transport block size may be predefined in the protocol. When performing data transmission, the terminal device may determine the specific value of the transport block size according to the protocol. The network device may not need to indicate the transport block size to the terminal device, reducing signaling overheads.

It should be noted that the fourth example and the first three examples may be separately implemented, or the fourth example may be implemented in combination with any one of the first three examples. This is not limited.

When the fourth example is implemented in combination with any one of the first three examples, it may be specified that the terminal device determines the specific value of the transport block size based on a protocol predefinition, or it may be specified that the terminal device determines the specific value of the transport block size based on the first information sent by the network device. This is not limited.

Based on the foregoing descriptions of the first information, when the network device indicates the transport block size to the terminal device by using the first information, the network device may send the first information to the terminal device in a broadcast, multicast, and/or unicast manner.

In a first possible design, the network device sends the first information to the terminal device in a broadcast, multicast, or paging manner.

The terminal device may be one or more terminal devices (or described as all terminal devices or any terminal device) that receive the first information in a broadcast or multicast manner, or one or more terminal devices (or described as all terminal devices or any terminal device) that are selected (or paged) for access or data transmission.

For example, a broadcast manner is used as an example. Any terminal device that receives the first information may store the first information, and in a subsequent communication scenario of regardless of whether the terminal device or the network device triggers access, determine, based on the first information, whether to segment a data packet, or determine a size of a segmented data packet based on the first information.

For another example, a terminal device that meets a paging condition is used as an example. In a subsequent random access process or a subsequent data transmission process, the terminal device may determine, based on the first information, whether to segment a data packet, or determine, based on the first information, a size of a segmented data packet.

For example, the first information may be carried in one or more of the following signaling: paging signaling, select signaling, and a broadcast message.

The network device may simultaneously send, to one or more terminal devices, the paging signaling and/or the select signaling that carry/carries the first information, to configure the transport block size for more than one terminal device. The terminal device that receives the first information may determine a specific value of the transport block size (or a segment block size), and then perform data transmission based on the transport block size (or the segment block size). For to-be-transmitted uplink data, the terminal device that receives the first information may determine, based on the transport block size indicated by the first information, whether to segment the data packet. Before the terminal device obtains a new transport block size, the terminal device determines, based on the transport block size indicated by the received first information, whether to segment the data packet. If the terminal device obtains a new transport block size, the terminal device may determine, based on the new transport block size, whether to segment the data packet. Herein, the terminal device that receives the first information may be all terminal devices that receive the first information, or may be at least one paged terminal device.

The one or more terminal devices may be terminal devices within coverage of the network device, or terminal devices within coverage of a cell of the network device.

In another possible implementation, the network device may indicate different transport block sizes (or different segment block sizes) to terminal devices of different types or in different groups. After receiving a transport block size indication, the terminal device performs segmentation based on the corresponding indication. For example, a value of a transport block size indicated by the network device to a terminal device with good coverage signal quality may be a first value, and a value of a transport block size indicated by the network device to a terminal device with poor coverage signal quality may be a second value. Different terminal devices perform segmentation based on received indications. For another example, a value of a transport block size indicated by the network device to a first-type terminal device may be a third value, and a value of a transport block size indicated by the network device to a second-type terminal device may be a fourth value.

In a second possible design, the network device sends the first information to the terminal device in a unicast manner.

For example, the first information may be carried in one or more of the following signaling: a random access response and contention resolution signaling.

In a random access process, the terminal device may send a random access request (or described as a message 1 (message 1, Msg1) or a random access message) to the network device. When sending a random access response (or described as a Msg2) to the terminal device based on the random access request, the network device may include the first information in the random access response. The terminal device may determine a specific value of the transport block size based on the first information in the random access response, and then perform data transmission based on the transport block size.

Alternatively, in a random access process, after receiving a random access response sent by the network device, the terminal device may send RRC signaling (or described as a Msg3) to the network device. When sending the contention resolution signaling (or described as a Msg4 or an ACK message) to the terminal device based on the RRC signaling, the network device may include the first information in the contention resolution signaling. The terminal device may determine a specific value of the transport block size based on the first information in the contention resolution signaling, and then perform data transmission based on the transport block size.

Alternatively, in a random access process, when receiving paging signaling or select signaling sent by the network device, the terminal device may send a random number (or described as a Msg3) to the network device. When feeding back an ACK message (or described as a Msg4 or contention resolution signaling) to the terminal device based on the random number, the network device may include the first information in the ACK message. The terminal device may determine a specific value of the transport block size based on the first information in the ACK message, and then perform data transmission based on the transport block size.

The network device sends the first information to the terminal device in the random access process, so that the terminal device can determine the transport block size as early as possible, and perform data transmission as early as possible based on the transport block size in a subsequent data transmission process. This ensures normal data transmission and improves reliability of the communication system.

For another example, the first information may be carried in one or more of the following signaling: RRC signaling, media access control control element (media access control control element, MAC CE) signaling, and downlink control information (downlink control information, DCI).

After the terminal device successfully accesses a network, the network device may include the first information in the RRC signaling, the MAC CE signaling, or the DCI, and send the first information to the terminal device. The terminal device may determine a specific value of the transport block size based on the first information, and then perform data transmission based on the transport block size.

Compared with the first possible design in which the network device simultaneously indicates the transport block size to the plurality of terminal devices in the broadcast, multicast, or paging manner, the second possible design in which the network device may determine, for each terminal device, a transport block size corresponding to each terminal device can better adapt to a data transmission process of each terminal device, and improve performance of the communication system.

In the second possible design, transport block sizes corresponding to the terminal devices may be the same or may be different. This is not limited.

Optionally, the first possible design and the second possible design may be separately implemented, or may be implemented in combination.

For example, the first possible design and the second possible design are implemented in combination. The network device may configure the transport block size for the terminal device by using the first information in a paging process. The network device may further reconfigure, in the random access process by using the first information, a transport block size for the terminal device that currently performs the random access process. The network device may further reconfigure a transport block size for the terminal device by using the first information after successful access of the terminal device.

For example, as shown in FIG. 12, the network device may send the first information to the terminal device by using the paging signaling in the paging process. After receiving the paging signaling, the terminal device may perform the random access process, for example, may send a random number (for example, an RN16) to the network device. When sending the ACK message to the terminal device based on the random number, the network device may include the first information in the ACK message, and reconfigure the transport block size for the terminal device. After the terminal device successfully accesses the network based on the ACK message, during communication between the terminal device and the network device, the network device may also reconfigure the transport block size for the terminal device again by using the first information.

Based on the foregoing descriptions of the first information, with reference to the user plane protocol stack shown in FIG. 9, the first protocol layer may directly determine the specific value of the transport block size based on the first information, or a bottom layer of the first protocol layer may indicate, to the first protocol layer, the transport block size indicated by the first information. This is not limited.

For example, when the first protocol layer is the MAC layer, the MAC layer may determine the specific value of the transport block size based on the first information. When the first protocol layer is the RLC layer, the MAC layer may determine the specific value of the transport block size based on the first information, and indicate the specific value to the RLC layer. When the first protocol layer is the RLC layer, the RLC layer may determine the transport block size based on the first information. When the first protocol layer is the PDCP layer, the MAC layer may determine the specific value of the transport block size based on the first information, and indicate the specific value to the PDCP layer via the RLC layer. When the first protocol layer is the SDAP layer, the MAC layer may determine the specific value of the transport block size based on the first information, and indicate the specific value to the SDAP layer via the RLC layer and the PDCP layer.

Optionally, the transport block size is associated with uplink data. In other words, the uplink data may be transmitted based on the transport block size.

Optionally, the transport block size is associated with uplink data and downlink data. In other words, the uplink data and the downlink data may be transmitted based on a same transport block size.

Correspondingly, the uplink data and the downlink data may alternatively not be transmitted based on the same transport block size. For example, the uplink data is transmitted based on a first transport block size, and the downlink data is transmitted based on a second transport block size. The first transport block size and the second transport block size may be indicated by same signaling, or may be indicated by different signaling. This is not limited.

Step 1102: If a size of a first data packet is greater than the transport block size, the first protocol layer of the terminal device segments the first data packet based on the transport block size, to obtain a plurality of first segmented data packets.

The first data packet may be a data packet received by the first protocol layer from a previous protocol layer, and a size of the first segmented data packet is less than or equal to the transport block size.

Specifically, if the size of the first data packet is greater than the transport block size, the first protocol layer of the terminal device may segment the first data packet based on the transport block size, to match a slot configuration in the network, so that the terminal device sends the uplink data (namely, the first segmented data packets) to the network device in an uplink slot, ensuring normal transmission of the uplink data, and improving reliability of the communication system.

Step 1103: The first protocol layer of the terminal device sends the plurality of first segmented data packets. Correspondingly, the network device receives the plurality of first segmented data packets from the terminal device.

Refer to the descriptions of the user plane protocol stack in FIG. 9. The first protocol layer of the terminal device may deliver the plurality of first segmented data packets to a next protocol layer until the plurality of first segmented data packets are sent to the network device in a plurality of uplink slots via the PHY layer.

It should be noted that the first segmented data packets may be encapsulated at different protocol layers in different manners, and an encapsulated data packet may still be referred to as the first segmented data packet.

Based on the method shown in FIG. 11, the RFID system can be supported in segmenting data based on the segmentation mechanism. The first protocol layer of the terminal device can semi-statically determine the transport block size based on the obtained first information, and segment the data packet based on the transport block size, so that the network device does not need to frequently indicate the transport block size to the terminal device, and signaling overheads can be reduced when the data packet is segmented.

Based on the method shown in FIG. 11, when the first protocol layer of the terminal device segments the first data packet, in a possible design, a header of the first segmented data packet includes one or more of the following: first indication information, second indication information, third indication information, and a segment sequence number.

Optionally, the header of the first segmented data packet may further include packet sequence number information of the original unsegmented data packet.

The first indication information may indicate that the first segmented data packet is a 1^{st} segmented data packet in the plurality of first segmented data packets, or indicate that the first segmented data packet is an intermediate segmented data packet in the plurality of first segmented data packets, or indicate that the first segmented data packet is a last segmented data packet in the plurality of first segmented data packets.

The 1^{st} segmented data packet may be a first part of data that is in data carried in the first data packet and that is less than or equal to the transport block size. In other words, the 1^{st} segmented data packet is a former part of data that is in the data carried in the first data packet and that is less than or equal to the transport block size. The last segmented data packet may be a last part of data that is in the data carried in the first data packet and that is less than or equal to the transport block size. The intermediate segmented data packet may be any segmented data packet that is neither the 1^{st} segmented data packet nor the last segmented data packet in the plurality of first segmented data packets.

For example, the first indication information occupies two bits. When a value of the first indication information is 00, it may be considered that the first indication information indicates that the first segmented data packet is the 1^{st} segmented data packet in the plurality of first segmented data packets. When the value of the first indication information is 01, it may be considered that the first indication information indicates that the first segmented data packet is the intermediate segmented data packet in the plurality of first segmented data packets. When the value of the first indication information is 10, it may be considered that the first indication information indicates that the first segmented data packet is the last segmented data packet in the plurality of first segmented data packets.

For example, the terminal device segments the first data packet based on the transport block size, to sequentially obtain a first segmented data packet 1, a first segmented data packet 2, a first segmented data packet 3, and a first segmented data packet 4. A value of first indication information in a header of the first segmented data packet 1 may be 00, values of first indication information in headers of the first segmented data packet 2 and the first segmented data packet 3 may be both 01, and a value of first indication information in a header of the first segmented data packet 4 may be 10.

The second indication information may indicate whether the first segmented data packet is a data packet obtained through segmentation.

For example, the second indication information occupies one bit. A value of the second indication information may be set to 0, to indicate that the first segmented data packet is a data packet obtained through segmentation, or the value of the second indication information is set to 1, to indicate that the first segmented data packet is a data packet obtained through segmentation.

The third indication information may indicate whether the first segmented data packet is a deliverable data packet (in other words, whether the first segmented data packet is the last segmented data packet).

For example, the third indication information occupies one bit. A value of the third indication information may be set to 1, to indicate that the first segmented data packet is a deliverable data packet, or the value of the third indication information may be set to 0, to indicate that the first segmented data packet is not a deliverable data packet.

For example, the terminal device segments the first data packet based on the transport block size, to sequentially obtain a first segmented data packet 1, a first segmented data packet 2, a first segmented data packet 3, and a first segmented data packet 4. Values of third indication information in headers of the first segmented data packet 1, the first segmented data packet 2, and the first segmented data packet 3 may all be 0, and a value of third indication information in a header of the first segmented data packet 4 may be 1.

The segment sequence number may indicate a sequence number of the first segmented data packet in the plurality of first segmented data packets.

Specifically, for a single-process transmission manner, there is no disorder in data transmission. The header of the first segmented data packet may include the segment sequence number, or may not include the segment sequence number. This is not limited. For a multi-process HARQ transmission manner or when there is an upper-layer ARQ, data disorder may occur in a retransmission mode. The header of the first segmented data packet may include the segment sequence number, so that the network device sorts the received first segmented data packets based on the segment sequence numbers and determines whether a packet loss occurs.

The terminal device sets the segment sequence number for each first segmented data packet, so that the network device can determine, based on the segment sequence numbers of the received first segmented data packets, whether a packet loss occurs. If the segment sequence numbers are continuous, it indicates that no packet loss occurs. If the segment sequence numbers are discontinuous, it indicates that a first segmented data packet whose segment sequence number is missing is lost. When a data packet is lost, the terminal device may perform retransmission, to ensure reliability of data transmission.

In a first example, the header of the first segmented data packet may include the first indication information.

In a second example, the header of the first segmented data packet may include the third indication information.

Based on the foregoing two examples, the network device can determine, based on the first indication information or the second indication information, whether the currently received first segmented data packet is the last first segmented data packet. If the currently received first segmented data packet is the last first segmented data packet, the network device may assemble the currently received first segmented data packet and a buffered data packet, and then deliver an assembled data packet to the previous protocol layer. If the currently received first segmented data packet is not the last first segmented data packet, the network device may buffer the currently received first segmented data packet, continue to receive a next first segmented data packet sent by the terminal device until the last first segmented data packet is received, assemble the last first segmented data packet and the buffered data packet, and deliver an assembled data packet to the previous protocol layer.

The data packet buffered by the network device may be a first segmented data packet that has been received by the network device but has not been delivered to the previous protocol layer, for example, may be the 1^{st} first segmented data packet in the plurality of first segmented data packets, or the intermediate first segmented data packet the plurality of first segmented data packets.

Optionally, when sending the first segmented data packets to the network device, the terminal device may send the first segmented data packets to the network device based on scheduling of the network device.

Optionally, in the foregoing two examples, the header of the first segmented data packet may further include the segment sequence number, so that the network device sorts the received first segmented data packets based on the segment sequence numbers and determines whether a packet loss occurs.

Different from determining, based on the first indication information or the third indication information, whether the currently received first segmented data packet is the last first segmented data packet in the foregoing two examples, the network device may alternatively determine, based on a buffer status report (buffer status report, BSR) or a remaining data amount indication, whether the currently received first segmented data packet is the last first segmented data packet.

The BSR indicates a data amount of to-be-sent data of the terminal device, and the remaining data amount indication indicates a data amount of remaining to-be-sent data of the terminal device.

Optionally, the BSR or the remaining data amount indication may indicate a quantity of remaining to-be-sent bytes or bits of the terminal device, a quantity of to-be-sent segments, or the like. This is not limited.

Optionally, the terminal device includes the BSR or the remaining data amount indication in a random access message, and sends the random access message to the network device.

For example, the terminal device may generate the BSR at the MAC layer and send the BSR to the network device. The network device determines the data amount of to-be-sent data of the terminal device based on the BSR, and configures a corresponding uplink resource for the terminal device. The terminal device may send the plurality of first segmented data packets to the network device by using the uplink resource configured by the network device. If a sum of data amounts of the plurality of first segmented data packets received by the network device is less than the data amount indicated by the BSR, it indicates that a first segmented data packet currently received by the network device is not the last first segmented data packet, and the network device may buffer the currently received first segmented data packet, and continue to receive the first segmented data packet sent by the terminal device. If a sum of data amounts of the plurality of first segmented data packets received by the network device is equal to the data amount indicated by the BSR, it indicates that a first segmented data packet currently received by the network device is the last first segmented data packet, and the network device may assemble the currently received first segmented data packet and the buffered data packet, and deliver an assembled data packet to the previous protocol layer.

For another example, the terminal device may generate the remaining data amount indication at the MAC layer, and send the remaining data amount indication to the network device. The network device may determine the data amount of remaining to-be-sent data of the terminal device based on the remaining data amount indication, and configure a corresponding uplink resource for the terminal device. The terminal device may send the plurality of first segmented data packets to the network device by using the uplink resource configured by the network device. If the network device determines, based on the remaining data amount indication, that the data amount of remaining to-be-sent data of the terminal device is not 0, it indicates that a first segmented data packet currently received by the network device is not the last first segmented data packet, and the network device may buffer the currently received first segmented data packet, and continue to receive the first segmented data packet sent by the terminal device. If the network device determines, based on the remaining data amount indication, that the data amount of remaining to-be-sent data of the terminal device is 0, it indicates that a first segmented data packet currently received by the network device is the last first segmented data packet, and the network device may assemble the currently received first segmented data packet and the buffered data packet, and deliver an assembled data packet to the previous protocol layer.

In a third example, the header of the first segmented data packet may include the second indication information and the segment sequence number.

The network device may determine, based on the second indication information, whether a currently received data packet (for example, a first segmented data packet) is a data packet obtained through segmentation. If the currently received data packet is a data packet obtained through segmentation, the network device may sort and assemble the received plurality of first segmented data packets based on the segment sequence numbers, and deliver an assembled data packet to the previous protocol layer. If the currently received data packet is not a data packet obtained through segmentation, the network device may directly deliver the received data packet to the previous protocol layer.

Optionally, the header of the first segmented data packet may alternatively include the first indication information or the third indication information.

If the network device determines, based on the second indication information, that the currently received data packet is a data packet obtained through segmentation, the network device may determine, based on the first indication information or the third indication information, whether the currently received first segmented data packet is the last first segmented data packet. If the currently received first segmented data packet is the last first segmented data packet, the network device may assemble the plurality of first segmented data packets, and deliver an assembled data packet to the previous protocol layer. Otherwise, the network device may continue to receive a next first segmented data packet until the last first segmented data packet is received.

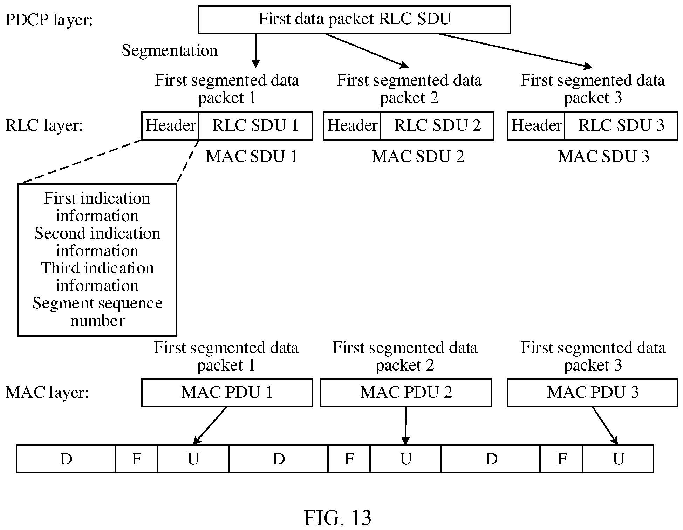

Based on the foregoing descriptions of the header of the first segmented data packet, as shown in FIG. 13, an example in which the RLC layer of the terminal device is used as the first protocol layer to segment the first data packet is used. The PDCP layer may send the first data packet to the RLC layer. If the size of the first data packet is greater than the transport block size, the RLC layer may segment the first data packet based on the transport block size to obtain the plurality of first segmented data packets. The header of each first segmented data packet may include one or more of the first indication information, the second indication information, the third indication information, and the segment sequence number. The RLC layer may deliver the plurality of first segmented data packets to the MAC layer. The MAC layer may perform MAC encapsulation on the plurality of first segmented data packets, and send the plurality of first segmented data packets to the network device at the PHY layer in an uplink slot (for example, a U slot).

For the RLC layer, this embodiment of this application may be considered as an improvement to the UM mode of the RLC layer, or may be considered as a new mode of the RLC layer. In this mode, a data packet segmentation manner is simple, and a header includes less content, so that header overheads can be reduced. This mode may also be considered as a simplified AM mode, indicating that an ARQ operation can also be supported.

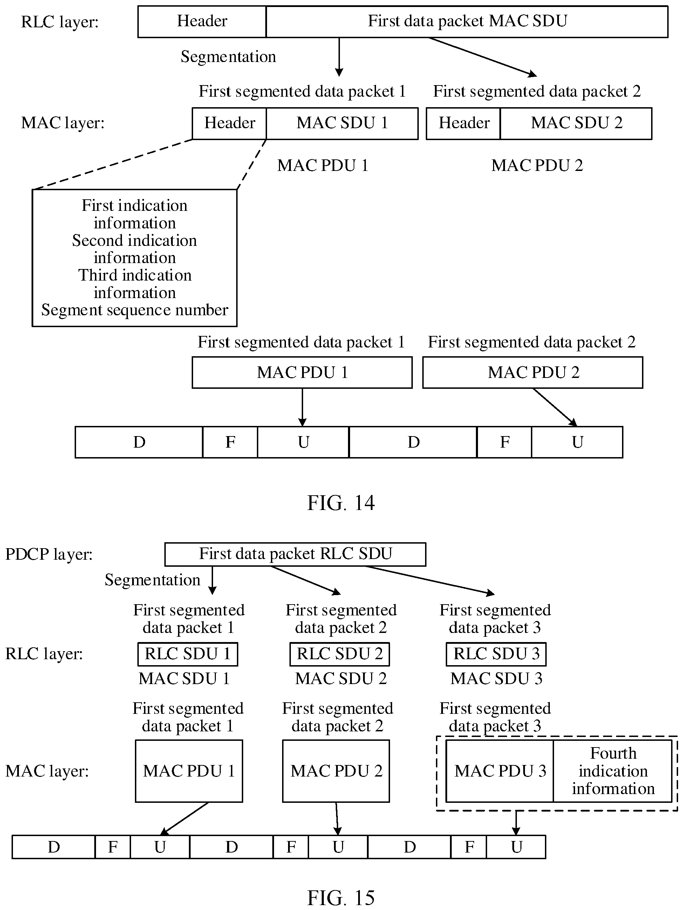

It should be noted that, in embodiments of this application (for example, any one of the embodiments shown in FIG. 11 to FIG. 13 and the following embodiments shown in FIG. 14 to FIG. 17), when the terminal device segments a data packet (in other words, performs packet segmentation), a size of a segmented data packet is not necessarily equal to the transport block size. For example, if the MAC layer needs to add uplink instruction information, the transport block size indicated by the MAC layer to the RLC layer may be less than the transport block size determined by the MAC layer based on the first information. For another example, when the RLC layer segments the data packet, data that may be transmitted by the RLC layer or the MAC layer may also be considered, and corresponding segmentation is performed.

In addition, the first information may be a maximum value of a transport block at a protocol layer. For example, the transport block size indicated by the first information is a maximum value of a transport block at the RLC layer. In this case, if the MAC layer further needs to transmit additional information, a final transport block size may be greater than the transport block size indicated by the first information.

Corresponding to the RLC layer shown in FIG. 13, as shown in FIG. 14, an example in which the MAC layer of the terminal device is used as the first protocol layer to segment the first data packet is used. The RLC layer may send the first data packet to the MAC layer. If the size of the first data packet is greater than the transport block size, the MAC layer may segment the first data packet based on the transport block size to obtain the plurality of first segmented data packets. The header of each first segmented data packet may include one or more of the first indication information, the second indication information, the third indication information, and the segment sequence number. The MAC layer may deliver the plurality of first segmented data packets to the PHY layer, and send the plurality of first segmented data packets to the network device at the PHY layer in an uplink slot (for example, a U slot).

In FIG. 13 and FIG. 14, when a data packet is transmitted between protocol layers, for each protocol layer, a data packet received by a current protocol layer from a previous protocol layer is an SDU of the current layer, and a data packet sent by the current protocol layer to a next protocol layer is a PDU of the current layer.

For example, the first data packet received by the RLC layer from the PDCP layer may be an RLC SDU, and the first segmented data packet sent by the RLC layer to the MAC layer may be an RLC PDU. The first segmented data packet received by the MAC layer from the RLC layer may be a MAC SDU, and the first segmented data packet delivered by the MAC layer to the PHY layer may be a MAC PDU.

Based on the foregoing descriptions of the header of the first segmented data packet, a simplified segmentation operation can be implemented at the first protocol layer of the terminal device, and the header of the first segmented data packet includes less content, so that header overheads can be reduced.

In still another possible design, the terminal device may further send fourth indication information to the network device.

The fourth indication information may indicate that the first segmented data packet is the last segmented data packet in the plurality of first segmented data packets, or indicate that the first segmented data packet is a deliverable data packet, or indicate that data packet delivery is completed. In this case, a non-last segmented data packet or an incomplete data packet may not include the fourth indication information in an air interface message, to reduce segmentation overheads and minimize overheads caused by segmentation.

For example, as shown in FIG. 15, the first segmented data packets sent by the terminal device to the network device include a first segmented data packet 1, a first segmented data packet 2, and a first segmented data packet 3. The terminal device may send the fourth indication information to the network device when sending the first segmented data packet 3. The network device may assemble the received first segmented data packet 3 and buffered data packets (for example, the first segmented data packet 1 and the first segmented data packet 2) based on the fourth indication information, and deliver an assembled data packet to the previous protocol layer.

Optionally, the fourth indication information is carried in the last first segmented data packet in the plurality of first segmented data packets. It may be understood that the fourth indication information and the last first segmented data packet are transmitted in one TB block.

A size of the last first segmented data packet including the fourth indication information is less than or equal to the transport block size.

Optionally, the fourth indication information and the last first segmented data packet in the plurality of first segmented data packets are in a same slot.

A sum of a size of the fourth indication information and the size of the last first segmented data packet is less than or equal to the transport block size.

Optionally, the fourth indication information and the first segmented data packet may alternatively be sent separately. In other words, the fourth indication information and the last first segmented data packet are in different slots.

The terminal device may send the fourth indication information to the network device in a second slot when sending the last first segmented data packet to the network device in a first slot.

Optionally, the fourth indication information is carried in one or more of the following signaling: MAC CE signaling and a control PDU.

The terminal device may set the fourth indication information at the RLC layer, for example, include the fourth indication information in the control PDU. The terminal device may alternatively set the fourth indication information at the MAC layer, for example, included the fourth indication information in the MAC CE. This is not limited.

It should be noted that, only the last first segmented data packet carries the fourth indication information. Therefore, to prevent the network device from parsing the fourth indication information as data, special mask information may be used for cyclic redundancy check (cyclic redundancy check, CRC) scrambling on the first segmented data packet including the fourth indication information, so that the data packet is correctly parsed. The special mask herein may be understood as a mask different from a mask corresponding to a CRC used by a non-last first segmented data packet. In other words, CRC scrambling is performed on the data packet by using another sequence.

Based on the foregoing descriptions of the fourth indication information, compared with adding, by the terminal device, one or more of the first indication information, the second indication information, the third indication information, and the segment sequence number to the header of each first segmented data packet, the terminal device sends the fourth indication information when sending the last first segmented data packet to the network device, so that additional indication information does not need to be set for each first segmented data packet, thereby reducing signaling overheads. The network device may determine, based on the fourth indication information, that receiving of the data packet is completed, and then deliver the received or buffered data packet to the previous protocol layer, to ensure integrity and reliability of data transmission.

It should be noted that, in the terminal device, a protocol layer at which the first data packet is segmented and a protocol layer at which the fourth indication information is set may be a same protocol layer, or may be different protocol layers. This is not limited. When the terminal device sends the fourth indication information to the network device, the header of the first segmented data packet may include one or more of the first indication information, the second indication information, the third indication information, and the segment sequence number, or may not include one or more of the first indication information, the second indication information, the third indication information, and the segment sequence number. This is not limited.

In addition, for uplink transmission, if the terminal device sends the BSR or the remaining data amount indication to the network device, the terminal device may send the fourth indication information to the network device, or may not send the fourth indication information to the network device. When the terminal device does not send the fourth indication information to the network device, the network device may determine, based on the BSR or the remaining data amount indication, whether to deliver the received data packet to the previous protocol layer.

Based on the foregoing descriptions of the segmentation mechanism, after the terminal device segments the first data packet to obtain the plurality of first segmented data packets, if the first segmented data packets are not byte-aligned, the terminal device may further perform byte alignment or bit length alignment on the first segmented data packets, so that a bottom layer processes the first segmented data packets based on a byte granularity, to match processing logic of the bottom layer.

The first protocol layer of the terminal device may pad each first segmented data packet, and send a padded first segmented data packet to the network device. A quantity of bits of the padded first segmented data packet may be an integer multiple of a first bit quantity.

For example, the MAC layer of the terminal device may perform TB block padding on each first segmented data packet, and send a padded first segmented data packet (or described as a padded TB block) to the network device.

Optionally, the first bit quantity may be predefined in a protocol, or may be preconfigured by the network device. This is not limited.

For example, the first bit quantity may be 8 bits, 10 bits, or the like. This is not limited.

Optionally, the padded first segmented data packet may further include length information.

The length information may indicate a padding length.

For example, the MAC layer of the terminal device performs TB block padding on each first segmented data packet. The length information may be carried in a header of a MAC CE in which the first segmented data packet is located or in the MAC CE.

It should be noted that, if the padded first segmented data packet does not include the length information, it may be considered that the first segmented data packet is padded to an integer quantity of bytes closest to that of the first segmented data packet or an integer first bit quantity.

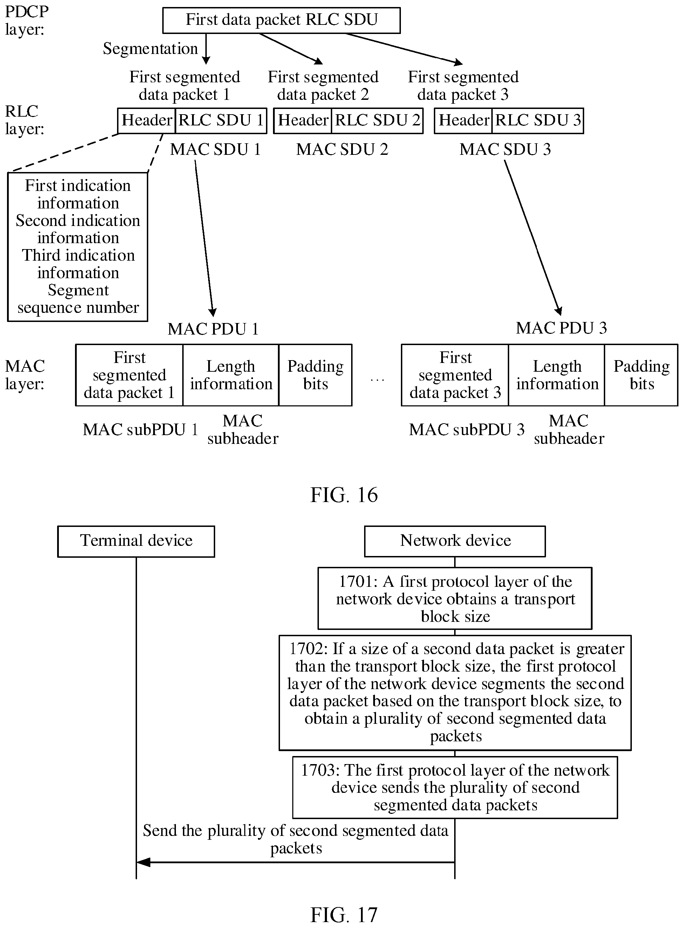

For example, as shown in FIG. 16, the terminal device segments the first data packet to obtain a first segmented data packet 1, a first segmented data packet 2, and a first segmented data packet 3. The MAC layer of the terminal device may pad each first segmented data packet, where a padded first segmented data packet 1 may include the first segmented data packet 1, length information, and padding bits, a padded first segmented data packet 2 may include the first segmented data packet 2, length information, and padding bits, and a padded first segmented data packet 3 may include the first segmented data packet 3, length information, and padding bits. The padded first segmented data packet may also be described as a MAC PDU, the first segmented data packet may also be described as a MAC subPDU, and the length information may also be described as a MAC subheader.

Different from the foregoing case in which the terminal device segments the first data packet, when the size of the first data packet is less than or equal to the transport block size, the first data packet may not need to be segmented, and the terminal device may send the first data packet to the network device.

In a possible design, when sending the first data packet to the network device, the terminal device may send fifth indication information to the network device.

The fifth indication information may indicate that the first data packet is a complete data packet, or indicate that the first data packet is a deliverable data packet, or indicate that data packet delivery is completed. In this case, an incomplete data packet may not include the fifth indication information in an air interface message, to reduce segmentation overheads and minimize overheads caused by segmentation.

When the terminal device sends the fifth indication information to the network device, the network device may determine, based on the fifth indication information, that the terminal device completes data packet delivery, and the network device may deliver the received first data packet to the previous protocol layer.

Optionally, the fifth indication information is carried in the first data packet.

A size of the first data packet including the fifth indication information is less than or equal to the transport block size.

Optionally, the fifth indication information and the first data packet are in a same slot.

A sum of a size of the fifth indication information and the size of the first data packet is less than or equal to the transport block size.

Optionally, the fifth indication information and the first data packet may alternatively be sent separately. In other words, the fifth indication information and the first data packet are in different slots.

The terminal device may send the fifth indication information to the network device in a second slot when sending the first data packet to the network device in a first slot.

Optionally, the fifth indication information is carried in one or more of the following signaling: MAC CE signaling and a control PDU.

The terminal device may set the fifth indication information at the RLC layer, for example, include the fifth indication information in the control PDU. The terminal device may alternatively set the fifth indication information at the MAC layer, for example, included the fifth indication information in the MAC CE. This is not limited.

It should be noted that, only the complete first data packet carries the fifth indication information. Therefore, to prevent the network device from parsing the fifth indication information as data, special mask information may be used for cyclic redundancy check (cyclic redundancy check, CRC) scrambling on the first data packet including the fifth indication information, so that the data packet is correctly parsed. The special mask herein may be understood as a mask different from a mask corresponding to a CRC used by an incomplete data packet. In other words, CRC scrambling is performed on the data packet by using another sequence.

It should be noted that, for uplink transmission, if the terminal device sends the BSR or the remaining data amount indication to the network device, the terminal device may send the fifth indication information to the network device, or may not send the fifth indication information to the network device. When the terminal device does not send the fifth indication information to the network device, the network device may determine, based on the BSR or the remaining data amount indication, whether the terminal device completes data packet delivery, and if the data packet delivery is completed, deliver the received data packet to the previous protocol layer.

Optionally, if the first data packet is not byte-aligned, the terminal device may further perform byte alignment on the first data packet, so that a bottom layer processes the first data packets based on a byte granularity, to match processing logic of the bottom layer.

The terminal device may pad the first data packet, and send a padded first data packet to the network device. A quantity of bits of the padded first data packet may be an integer multiple of a first bit quantity.

Optionally, the padded first data packet may further include length information. If the padded first data packet does not include the length information, it may be considered that the first data packet is padded to an integer byte closest to that of the first data packet.

For descriptions of padding the first data packet, refer to the foregoing descriptions of padding the first segmented data packet. Details are not described again.

Similar to the foregoing case in FIG. 11 to FIG. 16 in which the terminal device may segment the first data packet based on the transport block size when sending the first data packet to the network device, as shown in FIG. 17, when sending a second data packet to the terminal device, the network device may also segment the second data packet based on a transport block size, and send segmented data packets to the terminal device in a downlink slot.

FIG. 17 shows a communication method according to an embodiment of this application. As shown in FIG. 17, the method may include the following steps.

Step 1701: A first protocol layer of a network device obtains a transport block size.

The first protocol layer of the network device may be one or more of the following: an SDAP layer, a PDCP layer, an RLC layer, and a MAC layer.

Optionally, the first protocol layer may alternatively be a protocol layer newly defined in the future. This is not limited.

The network device may independently determine the transport block size, or may determine the transport block size based on a protocol predefinition. This is not limited. For descriptions of the transport block size, refer to the foregoing descriptions of the transport block size in step 1101. Details are not described again.

Optionally, the transport block size is associated with downlink data. In other words, the downlink data may be transmitted based on the transport block size.

Optionally, the transport block size is associated with uplink data and downlink data. In other words, the uplink data and the downlink data may be transmitted based on the same transport block size.

Correspondingly, the uplink data and the downlink data may alternatively not be transmitted based on the same transport block size. For example, the uplink data is transmitted based on a first transport block size, and the downlink data is transmitted based on a second transport block size. The first transport block size and the second transport block size may be indicated by same signaling, or may be indicated by different signaling. This is not limited.

Step 1702: If a size of a second data packet is greater than the transport block size, the first protocol layer of the network device segments the second data packet based on the transport block size, to obtain a plurality of second segmented data packets.

For descriptions of segmenting the second data packet by the first protocol layer of the network device based on the transport block size, refer to the foregoing descriptions of segmenting the first data packet by the first protocol layer of the terminal device based on the transport block size in step 1102. Details are not described again.

Step 1703: The first protocol layer of the network device sends the plurality of second segmented data packets. Correspondingly, a terminal device receives the plurality of second segmented data packets from the network device.

Refer to the descriptions of the user plane protocol stack in FIG. 9. The first protocol layer of the network device may deliver the plurality of first segmented data packets to a next protocol layer, until the plurality of second segmented data packets are sent to the terminal device in a plurality of downlink slots via a PHY layer.

It should be noted that the second segmented data packets at different protocol layers may be encapsulated in different manners, and an encapsulated data packet may still be referred to as the second segmented data packet.

In a possible design, when the first protocol layer of the network device segments the second data packet, a header of the second segmented data packet includes one or more of the following: sixth indication information, seventh indication information, eighth indication information, and a segment sequence number.

The sixth indication information may indicate that the second segmented data packet is a 1^{st} segmented data packet in the plurality of second segmented data packets, or indicate that the second segmented data packet is an intermediate segmented data packet in the plurality of second segmented data packets, or indicate that the second segmented data packet is a last segmented data packet in the plurality of second segmented data packets.

The seventh indication information may indicate whether the second segmented data packet is a data packet obtained through segmentation.

The eighth indication information may indicate whether the second segmented data packet is a deliverable data packet (in other words, whether the second segmented data packet is the last segmented data packet).

The segment sequence number indicates a sequence number of the second segmented data packet in the plurality of second segmented data packets.

In a first example, the header of the second segmented data packet may include the sixth indication information.

In a second example, the header of the second segmented data packet may include the eighth indication information.

Optionally, in the foregoing two examples, the header of the second segmented data packet may further include the segment sequence number, so that the terminal device sorts the received second segmented data packets based on the segment sequence numbers and determines whether a packet loss occurs.

In a third example, the header of the second segmented data packet may include the seventh indication information and the segment sequence number.

Optionally, the header of the second segmented data packet may alternatively include the sixth indication information or the eighth indication information.

It should be noted that, for descriptions of the sixth indication information, the seventh indication information, the eighth indication information, and the segment sequence number, refer to the foregoing related descriptions of the first indication information, the second indication information, the third indication information, and the segment sequence number. Details are not described again.

In still another possible design, the network device may further send ninth indication information to the terminal device.

The ninth indication information may indicate that the second segmented data packet is the last segmented data packet in the plurality of second segmented data packets, or indicate that the second segmented data packet is a deliverable data packet, or indicate that data packet delivery is completed.

For descriptions of the ninth indication information, refer to the foregoing descriptions of the fourth indication information. Details are not described again.

It should be noted that, in the network device, a protocol layer at which the second data packet is segmented and a protocol layer at which the ninth indication information is set may be a same protocol layer, or may be different protocol layers. This is not limited. When the network device sends the ninth indication information to the terminal device, the header of the second segmented data packet may include one or more of the sixth indication information, the seventh indication information, the eighth indication information, and the segment sequence number, or may not include one or more of the sixth indication information, the seventh indication information, the eighth indication information, and the segment sequence number. This is not limited.

Based on the foregoing descriptions of the segmentation mechanism, after the network device segments the second data packet to obtain the plurality of second segmented data packets, if the second segmented data packets are not byte-aligned, the network device may further perform byte alignment on the second segmented data packets, so that a bottom layer processes the second segmented data packets based on a byte granularity, match processing logic of the bottom layer.

The first protocol layer of the network device may pad each second segmented data packet, and send a padded second segmented data packet to the terminal device. A quantity of bits of the padded second segmented data packet may be an integer multiple of a second bit quantity.

Optionally, the second bit quantity may be predefined in a protocol, or may be preconfigured by the network device. This is not limited.

For example, the second bit quantity may be 8 bits, 10 bits, or the like. This is not limited.

Optionally, the padded second segmented data packet may further include length information. If the padded second segmented data packet does not include the length information, it may be considered that the second segmented data packet is padded to an integer byte closest to that of the second segmented data packet.

For descriptions of padding the second segmented data packet, refer to the foregoing descriptions of padding the first segmented data packet. Details are not described again.

Different from the foregoing case in which the network device segments the second data packet, when the size of the second data packet is less than or equal to the transport block size, the second data packet may not need to be segmented, and the network device may send the second data packet to the terminal device.

In a possible design, when sending the second data packet to the terminal device, the network device may send tenth indication information to the terminal device.

The tenth indication information may indicate that the second data packet is a complete data packet, or indicate that the second data packet is a deliverable data packet, or indicate that data packet delivery is completed.

For descriptions of the tenth indication information, refer to the foregoing descriptions of the fifth indication information. Details are not described again.

Optionally, if the second data packet is not byte-aligned, the network device may further pad the second data packet to implement byte alignment, so that a bottom layer processes the second data packet at a byte granularity, to match processing logic of the bottom layer.

The network device may pad the second data packet, and send a padded second data packet to the terminal device. A quantity of bits of the padded second data packet may be an integer multiple of a second quantity of bits.

Optionally, the second bit quantity may be predefined in a protocol, or may be preconfigured by the network device. This is not limited.

For example, the second bit quantity may be 8 bits, 10 bits, or the like. This is not limited.

Optionally, the padded second data packet may further include length information. If the padded second data packet does not include the length information, it may be considered that the second data packet is padded to an integer byte closest to that of the second data packet.

For detailed descriptions of padding the second data packet, refer to the foregoing related descriptions of padding the first segmented data packet. Details are not described again.

It should be noted that the methods provided in embodiments of this application may be implemented separately, or may be implemented in combination. This is not limited.

It may be understood that, in embodiments of this application, an execution body may perform a part or all of steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of each device may be obtained through division based on the foregoing method example. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

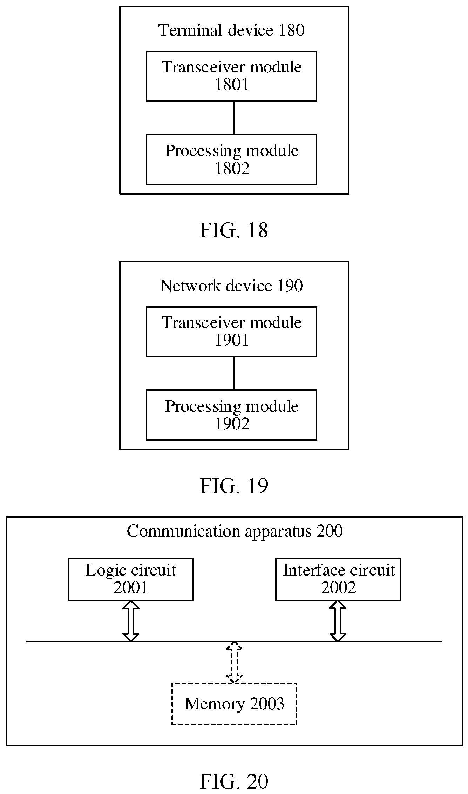

When each functional module is obtained through division based on each corresponding function, FIG. 18 shows a terminal device 180. The terminal device 180 may perform actions performed by the terminal device in FIG. 11 to FIG. 17.

The terminal device 180 may include a transceiver module 1801 and a processing module 1802. For example, the terminal device 180 may be a terminal device, or may be a chip used in the terminal device or another combined component, part, or the like that has a function of the foregoing terminal device. When the terminal device 180 is the terminal device, the transceiver module 1801 may be a transceiver, where the transceiver may include an antenna, a radio frequency circuit, and the like; and the processing module 1802 may be a processor (or a processing circuit), for example, a baseband processor, where the baseband processor may include one or more CPUs. When the terminal device 180 is the part that has the function of the foregoing terminal device, the transceiver module 1801 may be a radio frequency unit; and the processing module 1802 may be a processor (or a processing circuit), for example, a baseband processor. When the terminal device 180 is a chip system, the transceiver module 1801 may be an input/output interface of a chip (for example, a baseband chip); and the processing module 1802 may be a processor (or a processing circuit) of the chip system, and may include one or more central processing units. It should be understood that the transceiver module 1801 in this embodiment of this application may be implemented by a transceiver or a transceiver-related circuit component, and the processing module 1802 may be implemented by a processor or a processor-related circuit component (or referred to as a processing circuit).

For example, the transceiver module 1801 may be configured to perform all sending and receiving operations performed by the terminal device in the embodiments shown in FIG. 11 and FIG. 17, and/or configured to support another process of the technology described in this specification. The processing module 1802 may be configured to perform all operations other than sending and receiving operations performed by the terminal device in the embodiments shown in FIG. 11 and FIG. 17, and/or configured to support another process of the technology described in this specification.

In another possible implementation, the transceiver module 1801 in FIG. 18 may be replaced with a transceiver, and a function of the transceiver module 1801 may be integrated into the transceiver. The processing module 1802 may be replaced with a processor, and a function of the processing module 1802 may be integrated into the processor. Further, the terminal device 180 shown in FIG. 18 may further include a memory.

Alternatively, when the processing module 1802 is replaced with a processor, and the transceiver module 1801 is replaced with a transceiver, the terminal device 180 in this embodiment of this application may be a communication apparatus 200 shown in FIG. 20. The processor may be a logic circuit 2001, and the transceiver may be an interface circuit 2002. Further, the communication apparatus 200 shown in FIG. 20 may further include a memory 2003.

When each functional module is obtained through division based on each corresponding function, FIG. 19 shows a network device 190. The network device 190 may perform actions performed by the network device in FIG. 11 to FIG. 17.

The network device 190 may include a transceiver module 1901 and a processing module 1902. For example, the network device 190 may be a network device, or may be a chip used in the network device or another combined component, part, or the like that has a function of the foregoing network device. When the network device 190 is the network device, the transceiver module 1901 may be a transceiver, where the transceiver may include an antenna, a radio frequency circuit, and the like; and the processing module 1902 may be a processor (or a processing circuit), for example, a baseband processor, where the baseband processor may include one or more CPUs. When the network device 190 is the part that has the function of the foregoing network device, the transceiver module 1901 may be a radio frequency unit; and the processing module 1902 may be a processor (or a processing circuit), for example, a baseband processor. When the network device 190 is a chip system, the transceiver module 1901 may be an input/output interface of a chip (for example, a baseband chip); and the processing module 1902 may be a processor (or a processing circuit) of the chip system, and may include one or more central processing units. It should be understood that the transceiver module 1901 in this embodiment of this application may be implemented by a transceiver or a transceiver-related circuit component, and the processing module 1902 may be implemented by a processor or a processor-related circuit component (or referred to as a processing circuit).

For example, the transceiver module 1901 may be configured to perform all sending and receiving operations performed by the network device in the embodiments shown in FIG. 11 and FIG. 17, and/or configured to support another process of the technology described in this specification. The processing module 1902 may be configured to perform all operations other than sending and receiving operations performed by the network device in the embodiments shown in FIG. 11 and FIG. 17, and/or configured to support another process of the technology described in this specification.

In another possible implementation, the transceiver module 1901 in FIG. 19 may be replaced with a transceiver, and a function of the transceiver module 1901 may be integrated into the transceiver. The processing module 1902 may be replaced with a processor, and a function of the processing module 1902 may be integrated into the processor. Further, the network device 190 shown in FIG. 19 may further include a memory.

Alternatively, when the processing module 1902 is replaced with a processor, and the transceiver module 1901 is replaced with a transceiver, the network device 190 in this embodiment of this application may be a communication apparatus 200 shown in FIG. 20. The processor may be a logic circuit 2001, and the transceiver may be an interface circuit 2002. Further, the communication apparatus 200 shown in FIG. 20 may further include a memory 2003.

An embodiment of this application further provides a computer program product. When the computer program product is executed by a computer, a function of any one of the foregoing method embodiments can be implemented.

An embodiment of this application further provides a computer program. When the computer program is executed by a computer, a function of any one of the foregoing method embodiments can be implemented.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk or memory of the terminal. The computer-readable storage medium may alternatively be an external storage device of the foregoing terminal, for example, a plug-in hard disk drive, a smart media card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that in the specification, claims, and accompanying drawings of this application, the terms "first", "second", and the like are intended to distinguish between different objects, but are not intended to describe a particular sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the technical solutions of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A communication method, wherein the method is applied to a radio frequency identification RFID system, and the method comprises:
obtaining, by a first protocol layer of a terminal device, first information, wherein the first information indicates a transport block size;
if a size of a first data packet is greater than the transport block size, segmenting, by the first protocol layer of the terminal device, the first data packet based on the transport block size, to obtain a plurality of first segmented data packets, wherein the first data packet is a data packet received by the first protocol layer from a previous protocol layer, and a size of the first segmented data packet is less than or equal to the transport block size; and
sending, by the first protocol layer of the terminal device, the plurality of first segmented data packets.

2. The method according to claim 1, wherein
the first information comprises the transport block size; or
the first information comprises an index value associated with the transport block size; or
the first information comprises rate information and time domain configuration information, wherein the rate information and the time domain configuration information are used to determine the transport block size.

3. The method according to claim 1 or 2, wherein
the first information is carried in one or more of the following signaling: paging signaling, select signaling, a random access response, and contention resolution signaling.

4. The method according to any one of claims 1 to 3, wherein
the first protocol layer is one or more of the following: a service data adaptation protocol SDAP layer, a packet data convergence protocol PDCP layer, a radio link control RLC layer, and a media access control MAC layer.

5. The method according to any one of claims 1 to 4, wherein
a header of the first segmented data packet comprises one or more of the following: first indication information, second indication information, third indication information, and a segment sequence number, wherein
the first indication information indicates that the first segmented data packet is a 1^{st} segmented data packet in the plurality of first segmented data packets, or indicates that the first segmented data packet is an intermediate segmented data packet in the plurality of first segmented data packets, or indicates that the first segmented data packet is a last segmented data packet in the plurality of first segmented data packets;
the second indication information indicates whether the first segmented data packet is a data packet obtained through segmentation;
the third indication information indicates whether the first segmented data packet is a deliverable data packet; and
the segment sequence number indicates a sequence number of the first segmented data packet in the plurality of first segmented data packets.

6. The method according to any one of claims 1 to 4, wherein the method further comprises:
sending, by the terminal device, fourth indication information to a network device, wherein the fourth indication information indicates that the first segmented data packet is a last segmented data packet in the plurality of first segmented data packets, or indicates that the first segmented data packet is a deliverable data packet, or indicates that data packet delivery is completed.

7. The method according to claim 6, wherein
the fourth indication information is carried in the last first segmented data packet in the plurality of first segmented data packets.

8. The method according to claim 6, wherein
the fourth indication information and the last first segmented data packet in the plurality of first segmented data packets are in a same slot.

9. The method according to any one of claims 6 to 8, wherein
the fourth indication information is carried in one or more of the following signaling: media access control control element MAC CE signaling and a control protocol data unit PDU.

10. The method according to any one of claims 1 to 9, wherein the sending, by the first protocol layer of the terminal device, the plurality of first segmented data packets comprises:
padding, by the first protocol layer of the terminal device, the first segmented data packet, wherein a quantity of bits of a padded first segmented data packet is an integer multiple of a first bit quantity; and
sending, by the terminal device, the padded first segmented data packet.

11. The method according to claim 10, wherein
the padded first segmented data packet comprises length information, and the length information indicates a padding length.

12. The method according to any one of claims 1 to 11, wherein the method further comprises:
obtaining, by the first protocol layer, a second segmented data packet from the network device, wherein the second segmented data packet is one of a plurality of second segmented data packets obtained by the network device by segmenting a second data packet; and
if the second segmented data packet is a last second segmented data packet in the plurality of second segmented data packets or a deliverable data packet, delivering, by the first protocol layer, the second segmented data packet and a buffered data packet to the previous protocol layer, wherein the buffered data packet comprises a data packet received before the second segmented data packet; or
if the second segmented data packet is not a last second segmented data packet in the plurality of second segmented data packets or a deliverable data packet, receiving, by the first protocol layer, a next second segmented data packet.

13. A communication method, wherein the method is applied to a radio frequency identification RFID scenario, and the method comprises:
sending, by a network device, first information to a terminal device, wherein the first information indicates a transport block size, and the transport block size is used for data segmentation; and
obtaining, by the network device, a plurality of first segmented data packets from the terminal device, wherein a size of the first segmented data packet is less than or equal to the transport block size.

14. The method according to claim 13, wherein
the first information comprises the transport block size; or
the first information comprises an index value associated with the transport block size; or
the first information comprises rate information and time domain configuration information, wherein the rate information and the time domain configuration information are used to determine the transport block size.

15. The method according to claim 13 or 14, wherein
the first information is carried in one or more of the following signaling: paging signaling, select signaling, a random access response, and contention resolution signaling.

16. The method according to any one of claims 13 to 15, wherein the method further comprises:
if the first segmented data packet is not a last first segmented data packet in the plurality of first segmented data packets, receiving, by the network device, a next first segmented data packet.

17. The method according to any one of claims 13 to 16, wherein
a header of the first segmented data packet comprises one or more of the following: first indication information, second indication information, third indication information, and a segment sequence number, wherein
the first indication information indicates that the first segmented data packet is a 1^{st} segmented data packet in the plurality of first segmented data packets, or indicates that the first segmented data packet is an intermediate segmented data packet in the plurality of first segmented data packets, or indicates that the first segmented data packet is the last segmented data packet in the plurality of first segmented data packets;
the second indication information indicates whether the first segmented data packet is a data packet obtained through segmentation;
the third indication information indicates whether the first segmented data packet is a deliverable data packet; and
the segment sequence number indicates a sequence number of the first segmented data packet in the plurality of first segmented data packets.

18. The method according to any one of claims 13 to 16, wherein the method further comprises:
receiving, by the network device, fourth indication information from the terminal device, wherein the fourth indication information indicates that the first segmented data packet is the last segmented data packet in the plurality of first segmented data packets, or indicates that the first segmented data packet is a deliverable data packet, or indicates that data packet delivery is completed.

19. The method according to claim 18, wherein
the fourth indication information is carried in the last first segmented data packet in the plurality of first segmented data packets.

20. The method according to claim 18, wherein
the fourth indication information and the last first segmented data packet in the plurality of first segmented data packets are in a same slot.

21. The method according to any one of claims 18 to 20, wherein
the fourth indication information is carried in one or more of the following signaling: media access control control element MAC CE signaling and a control protocol data unit PDU.

22. The method according to any one of claims 13 to 21, wherein
the first segmented data packet is a data packet obtained through padding performed by the terminal device, and a size of the padded first segmented data packet is a multiple of first bits.

23. The method according to claim 22, wherein
the padded first segmented data packet comprises length information, and the length information indicates a padding length.

24. The method according to any one of claims 13 to 23, wherein the method further comprises:
if a size of a second data packet is greater than the transport block size, segmenting, by a first protocol layer of the network device, the second data packet based on the transport block size, to obtain a plurality of second segmented data packets, wherein the second segmented data packet is a data packet received by the first protocol layer of the network device from a previous protocol layer, and a size of the second segmented data packet is less than or equal to the transport block size; and
sending, by the network device, the plurality of second segmented data packets to the terminal device.

25. A communication apparatus, wherein the communication apparatus is used in a radio frequency identification RFID system, and the communication apparatus comprises:
a transceiver module, configured to obtain first information, wherein the first information indicates a transport block size; and
a processing module, configured to: if a size of a first data packet is greater than the transport block size, segment the first data packet based on the transport block size, to obtain a plurality of first segmented data packets, wherein the first data packet is a data packet received by a first protocol layer from a previous protocol layer, and a size of the first segmented data packet is less than or equal to the transport block size, wherein
the transceiver module is further configured to send the plurality of first segmented data packets.

26. The apparatus according to claim 25, wherein
the first information comprises the transport block size; or
the first information comprises an index value associated with the transport block size; or
the first information comprises rate information and time domain configuration information, wherein the rate information and the time domain configuration information are used to determine the transport block size.

27. The apparatus according to claim 25 or 26, wherein
the first information is carried in one or more of the following signaling: paging signaling, select signaling, a random access response, and contention resolution signaling.

28. The apparatus according to any one of claims 25 to 27, wherein
the first protocol layer is one or more of the following: a service data adaptation protocol SDAP layer, a packet data convergence protocol PDCP layer, a radio link control RLC layer, and a media access control MAC layer.

29. The apparatus according to any one of claims 25 to 28, wherein
a header of the first segmented data packet comprises one or more of the following: first indication information, second indication information, third indication information, and a segment sequence number, wherein
the first indication information indicates that the first segmented data packet is a 1^{st} segmented data packet in the plurality of first segmented data packets, or indicates that the first segmented data packet is an intermediate segmented data packet in the plurality of first segmented data packets, or indicates that the first segmented data packet is a last segmented data packet in the plurality of first segmented data packets;
the second indication information indicates whether the first segmented data packet is a data packet obtained through segmentation;
the third indication information indicates whether the first segmented data packet is a deliverable data packet; and
the segment sequence number indicates a sequence number of the first segmented data packet in the plurality of first segmented data packets.

30. The apparatus according to any one of claims 25 to 28, wherein
the transceiver module is further configured to send fourth indication information to a network device, wherein the fourth indication information indicates that the first segmented data packet is a last segmented data packet in the plurality of first segmented data packets, or indicates that the first segmented data packet is a deliverable data packet, or indicates that data packet delivery is completed.

31. The apparatus according to claim 30, wherein
the fourth indication information is carried in the last first segmented data packet in the plurality of first segmented data packets.

32. The apparatus according to claim 30, wherein
the fourth indication information and the last first segmented data packet in the plurality of first segmented data packets are in a same slot.

33. The apparatus according to any one of claims 30 to 32, wherein
the fourth indication information is carried in one or more of the following signaling: media access control control element MAC CE signaling and a control protocol data unit PDU.

34. The apparatus according to any one of claims 25 to 33, wherein
the processing module is further configured to pad the first segmented data packet, wherein a quantity of bits of a padded first segmented data packet is an integer multiple of a first bit quantity; and
the transceiver module is specifically configured to send the padded first segmented data packet.

35. The apparatus according to claim 34, wherein
the padded first segmented data packet comprises length information, and the length information indicates a padding length.

36. The apparatus according to any one of claims 25 to 35, wherein
the transceiver module is further configured to obtain a second segmented data packet from the network device, wherein the second segmented data packet is one of a plurality of second segmented data packets obtained by the network device by segmenting a second data packet; and
the transceiver module is further configured to: if the second segmented data packet is a last second segmented data packet in the plurality of second segmented data packets or a deliverable data packet, deliver the second segmented data packet and a buffered data packet to the previous protocol layer, wherein the buffered data packet comprises a data packet received before the second segmented data packet; or
the transceiver module is further configured to: if the second segmented data packet is not a last second segmented data packet in the plurality of second segmented data packets or a deliverable data packet, receive a next second segmented data packet.

37. A communication apparatus, wherein the communication apparatus is used in a radio frequency identification RFID scenario, and the communication apparatus comprises:
a transceiver module, configured to send first information to a terminal device, wherein the first information indicates a transport block size, and the transport block size is used for data segmentation, wherein
the transceiver module is further configured to obtain a plurality of first segmented data packets from the terminal device, wherein a size of the first segmented data packet is less than or equal to the transport block size.

38. The apparatus according to claim 37, wherein
the first information comprises the transport block size; or
the first information comprises an index value associated with the transport block size; or
the first information comprises rate information and time domain configuration information, wherein the rate information and the time domain configuration information are used to determine the transport block size.

39. The apparatus according to claim 37 or 38, wherein
the first information is carried in one or more of the following signaling: paging signaling, select signaling, a random access response, and contention resolution signaling.

40. The apparatus according to any one of claims 37 to 39, wherein
the transceiver module is further configured to: if the first segmented data packet is not a last first segmented data packet in the plurality of first segmented data packets, receive a next first segmented data packet.

41. The apparatus according to any one of claims 37 to 40, wherein
a header of the first segmented data packet comprises one or more of the following: first indication information, second indication information, third indication information, and a segment sequence number, wherein
the first indication information indicates that the first segmented data packet is a 1^{st} segmented data packet in the plurality of first segmented data packets, or indicates that the first segmented data packet is an intermediate segmented data packet in the plurality of first segmented data packets, or indicates that the first segmented data packet is the last segmented data packet in the plurality of first segmented data packets;
the second indication information indicates whether the first segmented data packet is a data packet obtained through segmentation;
the third indication information indicates whether the first segmented data packet is a deliverable data packet; and
the segment sequence number indicates a sequence number of the first segmented data packet in the plurality of first segmented data packets.

42. The apparatus according to any one of claims 37 to 40, wherein
the transceiver module is further configured to receive fourth indication information from the terminal device, wherein the fourth indication information indicates that the first segmented data packet is the last segmented data packet in the plurality of first segmented data packets, or indicates that the first segmented data packet is a deliverable data packet, or indicates that data packet delivery is completed.

43. The apparatus according to claim 42, wherein
the fourth indication information is carried in the last first segmented data packet in the plurality of first segmented data packets.

44. The apparatus according to claim 42, wherein
the fourth indication information and the last first segmented data packet in the plurality of first segmented data packets are in a same slot.

45. The apparatus according to any one of claims 42 to 44, wherein
the fourth indication information is carried in one or more of the following signaling: media access control control element MAC CE signaling and a control protocol data unit PDU.

46. The apparatus according to any one of claims 37 to 45, wherein
the first segmented data packet is a data packet obtained through padding performed by the terminal device, and a size of the padded first segmented data packet is a multiple of first bits.

47. The apparatus according to claim 46, wherein
the padded first segmented data packet comprises length information, and the length information indicates a padding length.

48. The apparatus according to any one of claims 37 to 47, wherein
a processing module is configured to: if a size of a second data packet is greater than the transport block size, segment the second data packet based on the transport block size, to obtain a plurality of second segmented data packets, wherein the second segmented data packet is a data packet received by a first protocol layer of the network device from a previous protocol layer, and a size of the second segmented data packet is less than or equal to the transport block size; and
the transceiver module is further configured to send the plurality of second segmented data packets to the terminal device.

49. A communication apparatus, wherein the communication apparatus comprises a processor, and the processor is configured to run a computer program or instructions, to enable the communication apparatus to perform the communication method according to any one of claims 1 to 12 or the communication method according to any one of claims 13 to 24.

50. A computer-readable storage medium, wherein the computer-readable storage medium stores computer instructions or a program, and when the computer instructions or the program is run on a computer, the communication method according to any one of claims 1 to 12 or the communication method according to any one of claims 13 to 24 is performed.

51. A computer program product, wherein the computer program product comprises computer instructions, and when some or all of the computer instructions are run on a computer, the communication method according to any one of claims 1 to 12 or the communication method according to any one of claims 13 to 24 is performed.
